(19) Europäisches Patentamt
European Patent Office
Office européen des brevets

(11) EP 1 108 771 B1

(12) **EUROPÄISCHE PATENTSCHRIFT**

(45) Veröffentlichungstag und Bekanntmachung des Hinweises auf die Patenterteilung:
**06.05.2004 Patentblatt 2004/19**

(51) Int Cl.$^7$: **C09J 151/06**, C08L 51/06, C09J 151/00, C09J 123/00

(21) Anmeldenummer: **00125465.5**

(22) Anmeldetag: **21.11.2000**

(54) **Lösbare Klebstoffe zum Verbinden von Substraten**

Soluble adhesives for joining substrates

Adhesifs solubles pour joindre des substrats

(84) Benannte Vertragsstaaten:
**AT DE ES FR GB IT**

(30) Priorität: **24.11.1999 DE 19956422**

(43) Veröffentlichungstag der Anmeldung:
**20.06.2001 Patentblatt 2001/25**

(60) Teilanmeldung:
**03000902.1 / 1 312 461**

(73) Patentinhaber: **Hella KG Hueck & Co.**
**59552 Lippstadt (DE)**

(72) Erfinder:
- **Rohrberg, Simone**
  **59558 Lippstadt (DE)**
- **Schmidt, Stephan**
  **59558 Lippstadt (DE)**

(56) Entgegenhaltungen:
**EP-A- 0 957 147**
**DE-A- 19 504 425**
**US-A- 3 987 122**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der Erfindung sind Klebstoffe zum lösbaren Verbinden von Substraten, insbesondere von glasartigen Kunststoffsubstraten mit thermoplastischen oder duroplastischen Kunststoffsubstraten sowie deren Anwendung zum lösbaren Verbinden von Lichtscheiben mit Lampengehäusen von Fahrzeugleuchten oder Fahrzeugscheinwerfem sowie die unter Verwendung der Klebstoffe hergestellten Fahrzeugleuchten oder Fahrzeugscheinwerfer.

Angesichts zunehmender Bemühungen, Produkte nach ihrem Einsatz als Gebrauchsgegenstand stofflich zu recyceln, besteht ein Bedarf an montageund demontagefreundlichen Verbindungstechniken.

Bekannte Heißschmelzklebstoffe können beispielsweise in Kartuschen oder fassähnlichen Gebinden wie auch als offene Blockware konfektioniert werden. Bei der Verwendung von Kartuschen wird häufig der gesamte Klebstoff erhitzt und mittels eines Handauftragegeräts verarbeitet. Bei größeren fassähnlichen Gebinden wird in einer stationären Anlage ein beheizter Stempel mit Abnahmeund Förderleitung auf die Heißschmelzklebstoffoberfläche gesetzt und nur aus dem Oberflächenbereich abgenommen. Dabei wird nur ein Teil des Heißschmelzklebstoffs erwärmt. Da der Heißschmelzklebstoff dabei zwangsgefördert wird, bestehen bei dieser Art von Auftragetechnik keine hohen Anforderungen an dessen Fließcharakteristik.

Nachteilig dabei ist die mangelhafte Wiederlösbarkeit und Restanhaftung des Heißschmelzklebdichtstoffes an den Substraten nach dem Trennen voneinander.

Im Stand der Technik sind Produkte der Fa. Beiersdorf AG, Hamburg, unter der Bezeichnung "Powerstrips" bekannt, die lösbare, jedoch drucksensitive Klebverbindungen im Sinne der vorliegenden Erfindung darstellen. Durch das Ziehen an einem Anfasser in der Richtung der Klebeebene kann ein Herausziehen des drucksensitiven Klebebandes erzielt werden. Die Substrate und das Klebeband werden stofflich getrennt zurückerhalten (DE 43 39 604 A und DE 33 31 016 A).

In der US 4,024,312 A wird ebenfalls dieses Wirkprinzip auf der Basis des Klebebandes beschrieben. Dieser Patentschrift folgen weitere, denen gemeinsam ist, dass in ihnen ausschließlich ein Klebeband eines bei Umgebungstemperatur applizierbaren drucksensitiven Klebstoffes (Pressuresensitiv Adhesiv, PSA) verwendet wird, das vorzugsweise mit einem stark reckbaren, nicht zum leichten Reißen neigenden Verstärkungsrücken versehen ist. Dieser ist notwendig, wie zu den Klebebandausführungen beschrieben wird, um ein Abreißen des Klebefilms vor dem endgültigen Herausziehen aus der Klebefuge zu verhindern. Da hierbei flächige Gebilde miteinander verbunden werden, deren Fügeflächen annähernd planparallel zueinander ausgerichtet sind, ist "ein Abreißen eines Klebebandes sehr leicht möglich und für den Anwender ein frustrierender Vorgang, wie in der DE 43 39 604 A ausgeführt wird.

In US 4,009,793 A wird vorgeschlagen, eine lösbare Verbindung eines Deckels mit einem Vorratsgefäß durch ein hitzeaktiviert schrumpfendes Klebeband mit einfacher Überlappung an den Enden auszuführen. Das Klebeband wird um den abzudichtenden Bereich geschlungen und der Schrumpfprozess thermisch induziert. Dieses Klebeband ist mit einem Verstärkungsrücken versehen, um die Wiederlösbarkeit zu gewährleisten. Ein besonderer Nachteil dieser Lehre ist die Unmöglichkeit, verschiedene Körper dicht miteinander zu verbinden, wenn die Oberflächenkontur von konvexen zu konkaven Kurvenverläufen übergeht. Ein weiterer Nachteil resultiert aus dem Umstand, dass ein übliches Klebeband mit sehr hohem Kraftaufwand entfernt werden muss, um ein wirklich stoffschlüssiges Trennen der Einzelkomponenten zu erreichen. Der letzte Punkt war demzufolge keine zu lösende Aufgabe dieser Schrift.

Lösbare Verbindungen ermöglichende Klebstoffe werden auch in einer weiteren Ausführungsform in der US 4,305,996 A beschrieben. Darin wird ein Polyol für polyurethanbasierende Materialien beansprucht, welches besonders gewünschte niedrige Viskositäten eines damit formulierten Haftklebestoffes ermöglicht. Der in dieser Schrift beschriebene PSA soll unter 180° Schälwinkel wiederentfembar sein. Damit geht notwendigerweise die Konfektionierung eines Klebebandes einher. Ein PSA wird vor dem eigentlichen Fügevorgang als Klebeband bereitgestellt und durch Druckausübung auf dieses mit den Substraten verbunden.

Eine andere Technik, um gefügte Gehäuseteile abzudichten, wird in der US 4,775,076 A beschrieben. Dieses Verfahren eignet sich nur mit der Einschränkung, dass es sich bei den zu fügenden Gehäuseteilen im Fügebereich um zylindrische Formen handelt. Unter Umgebungstemperatur wird eine abgelängte, flexible Dichtung in den zylindrischen Fügebereich des ersten Substrates eingelegt, das zweite Substrat mit seiner zylindrischen Oberfläche dagegengesetzt und mittels einer äußeren Einwirkung auf diesen Bereich wird das Dichtungsmaterial durch Temperaturerhöhung und Druck zum Schmelzen gebracht, um ein Verschweißen oder Kleben der Substrate mit- oder aneinander zu gewährleisten. Zwar ist ein Lösen, aber kein stoffschlüssiges Trennen nach dieser Operation möglich.

Weitere Vorschläge zu lösbaren Verbindungen mehrerer Substrate werden unter anderem in Form von Klebebändern in der US 5,897,949 A als PSA-Klebeband mit geschäumten Verstärkungsrücken, in der US 5,827,591 A als PSAkaschiertes Papier oder der US 5,672,402 A in der Ausführung als PSA-Klebeband mit einem nichtelastischen Verstärkungsrücken und in der US 5,470,622 mit einem warmaushärtenden Klebstoff mit einem unter Temperatureinfluss schrumpfendem Verstärkungsrücken, genannt.

Andere Beispiele lösbarer Verbindungen mehrerer Substrate miteinander stammen aus dem Bereich lithografischer Drucktechnik, bei der die den Abdruck erzeugende Schicht von der als zylindrischer Kern angeordneten

Druckwalze entfernbar sein soll, um material- und zeitsparend die Druckvorlagen wechseln zu können. Dazu schlägt die US 5,870,955 A vor, nach dem erfolgten Druck der gewünschten Anzahl an Papieren die eigentliche Druckschicht von dem Untergrund, das heißt Kern und Klebstoff, abzuschälen und zu verwerfen. Damit sich die Druckschicht vom Untergrund löst, wird die Erwärmung des gesamten Gebildes vorgeschlagen, damit der innere Zusammenhalt verloren geht und der Verbund getrennt werden kann. Dabei ist damit zu rechnen, dass der vorgeschlagene Acrylatklebstoff in sich reißt und es zu Anhaftungen auf dem Kern kommt. Der Klebstoff wird als Folie auf der Walze appliziert.

In der US 4,461,663 A wird ein entsprechendes Verfahren einer lösbaren Bedruckungsschicht auf einem Walzenkem beschrieben. Die Lösbarkeit wird durch Erwärmen des gesamten Verbundes hergestellt und die obere Bedruckungsschicht durch Abschälen vom Untergrund getrennt. Diesen Klebstoff appliziert man als Hotmelt. Bei dieser Art von Trennoperation wird der Hotmelt weich und kann kohäsiv versagen.

Lösbare Abdichtungen für Scheinwerfersystem im Kraftfahrzeugbereich mittels Gelen, beispielsweise aus Silikonen für Vergussaufgaben im Elektronikbereich, wurden in der Vergangenheit bereits vorgeschlagen, wobei hier vier als wesentlich erkannte Nachteile auftreten. Diese Systeme werden im flüssigen Zustand in ein normales, wie bei Scheinwerfersystemen bisher übliches U-förmiges Abdichtbett appliziert und müssen vor oder nach dem Fügen längere Zeit aushärten, wobei zusätzliche Sicherungselemente vorzusehen sind. Da silikonbasierende Stoffe keine gute Haftung auf unvorbehandeltem Polypropylen haben, ergibt sich bei dieser speziellen Anwendung ein weiterer Nachteil. Die Verbindung ist nicht sicher vor dem Durchdringen eines gebündelten Wasserstrahls, beispielsweise aus einem Hochdruckreiniger. Es sind mobilisierbare Anteile eines weichmachenden Silikonöls zugegen, wie auch aus der US 5,886,111 A hervorgeht. Dieser letztgenannte Nachteil ist zu eliminieren, wenn stofflich entsprechend anders aufgebaute Systeme verwendet werden. Diese Art der Gestaltung einer Abdichtung ermöglicht ein Lösen der Fügepartner voneinander, indem die Substrate voneinander weggezogen werden.

Ebenfalls als Stand der Technik bekannt geworden ist ein Scheinwerfersystem der Fa. Ichikoh, Japan, in dem ein leicht oberflächenklebriges, gelartiges Material eingesetzt wird. Es weist einen sehr kleinen Modul neben hoher Reversionsfähigkeit auf und wird in ein eher "klassisch" U-profiliertes Abdichtbett eines Scheinwerfers für Kraftfahrzeuge appliziert. Nach einem Verfestigungsprozess wird der Abschlussscheibenfuß in das Material hineingedrückt und mittels einer Anzahl umlaufend angeordneter Befestigungselemente in dieser Lage gehalten. Dieses Material lässt es zu, dass nach Entfernen der Sicherungselemente die Abschlußscheibe manuell, aber mit hohem Kraftaufwand aus dem Verbund gelöst werden kann. Dazu muss an den beiden Substraten selbst gezogen werden. Ein weiterer Nachteil dieses Systems ist die Tatsache, dass durch einen eng gebündelten Wasserstrahl aus einem Hochdruckreiniger ein Durchschießen des Verbundes zwischen Dichtungsmasse und Substrat nicht verhindert werden kann, wenn dieser Bereich getroffen wird. Unter dem Aspekt der konstruktiven Auslegung handelt es sich bei diesem System um eine als Flüssigkeit applizierte Gummidichtung, die unter einer ständigen Anpresskraft gehalten werden muss, um die durch die geringe Adhäsion unterstützte Dichtfunktion im positiven Sinne zu gewährleisten.

In der US 5,560,706 A wird zu der Aufgabe einer lösbaren Verbindung einer Abschlußscheibe mit einem Gehäuse eines Scheinwerfers vorgeschlagen, eine in dem U-förmigen Klebebett aufgeschäumte, nichtklebende Dichtung zu verwenden. Die Dichtigkeit wird erfindungsgemäß durch genügend hohe Anpresskräfte sichergestellt, welche durch mechanische Verklammerungssysteme aufzubringen sind. Dazu muss das geschäumte Material vor dem Fügen aushärten, woraus ein erheblicher Bedarf an Zeit und Vorrichtungen in Form einer ausreichend lang bemessenen Aushärtestrecke entsteht. Bei einer Umgebungstemperatur von ca. 100°C tritt bei diesem System eine Spannungsrelaxation der Schaumdichtung auf und der Scheinwerfer wird undicht, was einen weiteren Nachteil darstellt. Nach dem Gebrauch des so gefertigten Artikels kann der Scheinwerfer nach Entfernen der Verklammerung geöffnet werden.

Es besteht folglich ein großer Bedarf an einer Klebmasse, die auf unterschiedlich geformten Untergründen in einem industriellen Fertigungsprozess verwendet werden kann, und die ein restloses und einfaches Lösen der Komponenten des Verbundes voneinander nach dem Gebrauch ermöglicht. Beispielhaft für diesen weiter zunehmenden Bedarf kann der Umstand angeführt werden, dass Kraftfahrzeuge zukünftig nahezu vollständig zerlegbar und stofflichem Recycling zuführbar sein müssen, obwohl die in ihrem Ausmaß eher zunehmenden Klebeverfahren klassisch als nicht lösbar eingestuft werden. Die verschiedenen oben zitierten lösbaren Verbindungstechniken sind alle mit erheblichen Nachteilen behaftet. Lösbare Klebebänder sind in der industriellen Fertigung bei komplex geformten Oberflächen mit den typisch auftretenden Spaltmaßtoleranzen und dem hohen Handhabungsaufwand ungeeignet. Aufschmelzbare Heißschmelzklebemassen, welche ein Erweichen und anschließendes kohäsives Versagen des Klebestoffs ermöglichen, sind wegen des Erwärmungsschrittes und der restlichen Kleberanhaflungen ebenfalls abzulehnen. Besonders bei großflächigen Verklebungen oder Abdichtungen mit typischerweise kleinen Flächenlasten sind direkt applizierbare Klebe- oder Klebdichtmassen von großem Vorteil, insbesondere bei restloser Entfembarkeit.

Zu solchen Anwendungen könnten Klebeabdichtungen von Innenverkleidungen, Spritzschutzschürzen und Stoßfängem für Kraftfahrzeuge genauso gezählt werden, wie Rahmen- und Fensterabdichtungen im Bau- und Automobilbereich, vibrations- und schalldämmende Antidröhnmassen und andere ähnlich gelagerte in der industriellen Praxis auftretende Anwendungen.

Allgemein werden alle Beleuchtungseinrichtungen für Kraftfahrzeuge, die mittels Hotmeltklebdichtstoff hergestellt werden, als lösbar eingestuft. Dazu muss eine Erwärmung des gesamten Gebildes herbeigeführt werden und die Substrate werden durch voneinander Wegziehen getrennt. Dabei verbleibt üblicherweise ein Rest von Klebdichtstoff an den Substraten.

Die Aufgabe der vorliegenden Erfindung ist es, wiederlösbare Klebeverbindungen zwischen Substraten zu erzeugen, wobei zusätzliche mechanische Sicherungen verwendet werden können. Nach dem Trennvorgang liegen die Einzelteile stofflich getrennt vor. Dabei handelt es sich insbesondere um die Abdichtung von Gehäusen und Deckeln durch Klebdichtstoffe, wobei die Lösung der vorgenannten Aufgabe speziell für Beleuchtungseinrichtungen für Kraftfahrzeuge geeignet ist. Als stofflich getrennt gilt ein gelöster Verbund im Sinne der vorliegenden Erfindung auch, wenn noch mikroskopisch erkennbare Filme von Klebeharzanhaftungen an den Substraten verbleiben. Diese sollten jedoch typischerweise Schichtdicken kleiner 5 µm aufweisen, vorzugsweise jedoch nicht nachweisbar sein.

Die vorgenannte Aufgabe wird in einer ersten Ausführungsform gelöst durch nicht-drucksensitive, durch Schälwirkung bei kleinen Schälwinkeln restfrei entfembare, bei Applikationstemperatur fließfähige Klebstoffe.

Wesentlicher Kern der vorliegenden Erfindung ist eine flüssig applizierbare Klebmasse, um wiederlösbare Klebverbindungen zwischen Substraten zu erzeugen, wobei zusätzliche mechanische Sicherungen verwendet werden können. Bei den Substraten handelt es sich um Festkörper aus Materialien, deren Steifigkeit in Richtung der Fügeebene höher ist als die der Klebmasse.

Durch die flüssig applizierbare Klebdichtmasse bzw. den fließfähigen Klebstoff lassen sich relativ einfach wiederlösbare Klebverbindungen zwischen Bauteilen bzw. Substraten erzeugen, wobei zusätzliche mechanische Sicherungen verwendet werden können. Bei den Substraten bzw. Bauteilen handelt es sich um Festkörper aus Materialien, deren Steifigkeit in Richtung der Fügeebene höher ist als die der Klebmasse.

Bei den als Substrat verwendeten Materialien handelt es sich beispielsweise um natürlich gewachsene Rohstoffe wie Holz und zu Fasern und Geweben verarbeitbares Material, um abgewandelte Naturstoffe wie duroplastische Caseine, um thermoplastische Celluloseabkömmlinge wie -nitrate, -acetate, - mischester, -ether, und um natürliche anorganische Materialien wie Gesteine, künstlich hergestellte anorganische Materialien wie Beton, Zement, Press- und Sintermaterialien sowie Gläser, beispielsweise Natronkalksilicatgläser, Borosilikat-, Phosphat- und Quarzglas oder Emaille.

Zu den künstlichen anorganischen Materialien zählen beispielsweise Metalle, insbesondere sind darunter geeignet Stähle und bevorzugt die gut umformbaren Stähle, davon insbesondere St3 bis St7, DX 52 bis DX 56 und DC 03 bis DC 06. Diese Stahloberflächen erhalten in der Regel eine anorganische Oberflächenvergütung wie beispielsweise eine Schmelztauchveredlung mit Al nach DIN EN 10154, sowie elektrolytisch aufgebrachte Zn-Schichten, auch als elektrolytische Zink-Nickel-Beschichtung nach DIN 16231, DIN 1624, DIN 17163, DIN EN 10152 und SEW 0954 und chromatierten Oberflächen, die mit oder ohne chromatierter Oberfläche Al-plattiert werden entsprechend DIN 1624 und DIN 1544 beziehungsweise EN 10139 und EN 140. Weitere organische Bindemittel enthaltende Beschichtungen können sich anschließen, wie beispielsweise Lacke, PVC-Beschichtungen, wozu auch Folien gehören, Elektrotauchlacke, wässrige Lacksysteme und Pulverlacke.

Weiterhin sind auch Nichteisenmetalle wie Al 99,85 weich bis hart nach einem Eloxierverfahren und eventuelle Lackierungen und PVC-Folienkaschierungen geeignet sowie CuZn-Legierungen unterschiedlicher Zusammensetzung nach DIN 179, die anschließend verkupfert, vemickelt und/oder verchromt werden können. Die geeigneten metallischen Substrate umfassen weiterhin Magnesiumund Zink-basierende druckgussfähige Zusammensetzungen, die durch Galvanisieren und Nass- oder Pulverlackieren modifiziert werden können, beispielsweise entsprechend DIN 1725 beziehungsweise DIN 1743.

Besonders sind auch nichtrostende Stähle unterschiedlicher Zusammensetzung geeignet, welche durch Glanzvemickelung oder Glanzverchromung und Lackbeschichtungssysteme modifiziert werden können, beispielsweise entsprechend EN 10088-1 bzw. EN 10088-2.

Geeignete Korrosionsschutzlacke sind beispielsweise aus der Gruppe der Polyaniline und der Zn-haltigen Lacke ausgewählt. Die galvanisch abgeschiedenen Substrate sind beispielsweise Cu, Ni, Cr, Ag, Au sowie sogenanntes chemisches Nickel aus galvanischen Bädem mit 10 % Phosphor, Zn in den Modifikationen "blank", "gelb", und "schwarz-oliv", Zn/Ni mit ca. 12 % Ni in den Modifikationen "gelb" und "schwarz", Zn/Ni mit 2,5 bis 15 % Pb, Aluminium anodisch oxidiert, phosphatierte oder chromatierte Schichten.

Bei den künstlichen organischen Substraten handelt es sich beispielsweise um polykondensierte Duroplaste wie Phenol-, UP-, Harnstoff- und Thioharnstoff-, Melamin-, Alkyd-, Allyl-, Silikon-, Polyimid-, Polybenzimidazolharze, bei den polykondensierten Thermoplasten um Polyamide, -carbonat, -ester, -phenylenoxid, - sulfon und Polyvinylacetal sowie Polybutylenterephthalat, -ethylenterephthalat und Polyoximethylen.

Von den thermoplastischen Polymerisaten sind Polyethylen, Polypropylen, Poly-1-buten, Poly-4-methyl-1-penten, Polyvinylchlorid, Polyvinylidenchlorid, Polyvinylidenfluorid, Polymethylmethacrylat und dessen Copolymeren mit Maleinsäureanhydrid und Imide der Polyacrylate, Polyacrylnitril, Polystyrol, Polyacetal, Fluorkunststoffe, Polyvinylalkohol, Polyvinylacetat, Poly-p-xylylen, Polyvinylcarbazol und lonomere sowie aliphatische Polyketone beziehungsweise -etherketone, Polyvinylpyrrolidon, Styrol-Acrylnitril-copolymere, Cycloolefincopolymere oder Acrylnitril-Styrol-Acrylestercopolymeren besonders geeignet. Außerdem ist die Haftung auf Polyaddukten wie Epoxidharzen, linearen und vernetzten Polyurethanen und Polyhamstoffen aus sterisch gehinderten Diaminen mit aliphatischen Diisocyanaten umgesetzt, sowie Cyanatoesterharzen zu erzielen.

Die genannten Kunststoffe können auch in Kombination miteinander als sogenannter "Blend" eingesetzt werden, um ein geeignetes Substrat zu bilden. Als Substrate sind ebenfalls dünne Oberflächenschichten geeignet, die durch die Modifizierung des Substrats selbst durch nicht beschichtende Gase, in diesem Fall Ar, $N_2$, $O_2$ und Luft, bei Anregung beispielsweise durch Gleich-, Wechselspannung, Mittel- und Hochfrequenz oder Mikrowellenstrahlung, UV-Licht und Laseraktivierung entstehen.

Ebenfalls sind dünne Schichten geeignet, die auf einen Stoff aufgedampft werden, wie Metallschichten. Diese bestehen aus beispielsweise Al, Cr, Stahl, Cu, Ag, Au oder In, die durch thermische Verdampfung, Elektronenstrahlverdampfung oder Sputtern erzeugt werden.

Als Substrat geeignete dielektrische Schichten können ebenfalls durch thermische oder Elektronenstrahlverdampfung, Sputtem und Plasma-CVD erzeugt werden. Geeignet sind Oxide wie beispielsweise $SiO_x$, $Ti_xO_x$, $CeO_2$ und $Al_2O_3$ und das Fluorid $MgF_2$.

Eine leitfähige geeignete Beschichtung stellt das Indium-Zinnoxid dar, erzeugt wie die oben genannten Oxidschichten.

Plasmapolymerschichten aus den Monomeren Hexamethyldisiloxan, 1,1,1,3,3,3-Hexamethyl-disilazan und Tetraethylorthosilicat sowie andere unter Normalbedingungen gasförmige und flüssige Kohlenwasserstoffe, Alkohole wie beispielsweise Methanol und Aromaten, die durch Plasma-CVD beziehungsweise Plasmapolymerisation hergestellt werden sind geeignete Substrate.

Die Hartstoffschichten wie beispielsweise Nitride, Carbide der Übergangsmetalle wie Ti, W und ADLC-Schichten sind ebenfalls geeignete Substrate.

Auch Farbstoffschichten anorganischer Farbstoffe und organischer abscheidbarer Stoffe wie Phthalocyanine, Rhodaminfarbstoffe sind geeignete Substrate.

Auf unterschiedliche Untergründe aufgebrachte Beschichtungen wie Pulver- oder Nasslacke oder Pasten sind nach der Härtung als Substrat geeignet. Diese basieren beispielsweise auf Acrylharzen, chlorsulfoniertem Polyethylen, Epoxydharzen, Ethylenvinylacetatharzen, Melaminformaldehydharzen, chloriertem Polyethylen, Phenol-Formaldehydharzen, Polymethlymethacrylat, Polytetrafluorethylenen, Polyurethanharzen, Polyvinylacetatharzen, Polyvinylbutyralharzen, Polyvinylchloridharzen, Polyvinylidenchloridharzen, Polyvinylidenfluoridharzen, Polyvinylfluoridharzen, Chlorkautschukharzen, Cyclokautschukharzen, Blockpolystyrol-Blockpolybutadienharzen, Silikonharzen, Harnstoffformaldehydharzen, ungesättigten Polyesterharzen. Geeignete Anstrichmittel sind weiterhin auf der Basis von Bitumen, Teer und Polyurethan-Teer-Kombinationen aufgebaut.

Der erfindungsgemäße Klebstoff wird in pumpbarer, vorwiegend flüssiger Form auf die zu verklebenden Substrate appliziert. Weitere Substrate können auf den aufgetragenen fließfähigen Klebstoff aufgesetzt und dadurch mit diesem verbunden werden.

Die Viskosität als Maß für die Fließfähigkeit beträgt vorzugsweise zu dem Zeitpunkt des Auftrags des Klebstoffs und des Fügens aller miteinander zu verbindender Substrate mehr als $\eta = 10^{-2}$ Pas und weniger als $\eta = 5 \times 10^6$ Pas, jeweils bei einer Scherrate von $\gamma = 10/s$ und mehr als $\eta = 10^{-1}$ Pas und weniger als $\eta = 5 \times 10^7$ Pas, jeweils bei einer Scherrate von $\gamma = 0{,}1/s$ mit einem Kegel/Platte oder Platte/Platte-Viskosimeter bestimmt. Der mit Hilfe eines mechanisch-dynamischen Spektrometers ermittelte viskoelastische Dämpfungsfaktor $\tan(\delta)$ ist bei dem Auftrag des Klebstoffs vorzugsweise größer als 0,8 und bevorzugt größer als 1,5. Alle in diesem Anspruch genannten viskoelastischen Daten von $\tan(\delta)$, G", |G*| werden im linear-viskoelastischen Bereich der Materialeigenschaften bestimmt.

Der Applikation folgt eine Materialverfestigung der Klebmasse zu einem praktisch gummielastischen Festkörper. Diese Klebmasse zeigt eine große Elastizität und hohes Dehnvermögen bis zum Riss, wenn diese deformiert wird. Die Materialverfestigung kann aus einer Temperaturabsenkung, chemischen Vemetzung oder sonstigen Aggregatbildung sowie aus Kombinationen dieser resultieren.

Bei der Verfestigung fällt der Dämpfungsfaktor $\tan(\delta)$ auf Werte unter ½ des Wertes für den $\tan(\delta)$, den der Klebstoff bei dem Auftrag aufweist, bevorzugt unter einem Wert von $\tan(\delta) = 0.5$.

Der Klebstoff liegt im Gebrauchstemperaturbereicht oberhalb der Glastemperatur der Elastomerphase vor. Diese Glastemperatur wird definiert als das Maximum des Verlustmoduls G", welche der Hauptdispersion der Elastomerphase zuzurechnen ist. Bei dem Überschreiten der so definierten Glastemperatur fällt der Komplexe Schermodul typischerweise um etwa zwei bis drei Dekaden auf etwa $|G^*|/[Pa] \sim 10^5$.

Der komplexe Schermodul |G*| des geeigneten Materials liegt zwischen $2 \times 10^2$ Pa und $5 \times 10^7$ Pa, vorzugsweise zwischen $5 \times 10^3$ Pa und $5 \times 10^6$ Pa, bestimmt bei einer Messfrequenz von $\omega = 1/s$ und bei einer Temperatur, die um 30 K höher liegt als die oben definierte Glastemperatur.

Die im Stimabzugsversuch bestimmte Haftung des Klebstoffs auf den geeigneten Substraten ist kleiner als dessen maximale Reißfestigkeit.

Ein weitere Ausführungsform der vorliegenden Erfindung umfasst daher Fahrzeugleuchten oder Fahrzeugscheinwerfer umfassend eine Lichtscheibe aus Glas, glasartigem Kunststoffsubstrat und ein Lampengehäuse aus thermoplastischem oder duroplastischem Kunststoffsubstrat, die dadurch gekennzeichnet sind, dass die Lichtscheibe und das Lampengehäuse mit einem Heißschmelzklebdichtstoff, wie oben definiert, verbunden sind.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

Figur 1: Eine Darstellung unterschiedlicher Belastungsformen beim Gebrauch einer Klebeverbindung,

Figur 2: einen Dehnversuch an einem Prüfkörper aus dem Material der Beispielrezeptur 1,

Figur 3: einen Relaxationsversuch an einem Prüfkörper aus dem Material der Beispielrezeptur 1 nach einer Dehnung von 300 %,

Figur 4: viskoelastische Spektren des Materials der Beispielrezeptur 1 als Funktion der Temperatur ermittelt im liniear viskoelastischen Bereich der Deformation,

Figur 5: ein Element eines gummielastischen Körpers vor (2.a) und nach (2.b) einer Dehnung,

Figur 6: eine räumliche Darstellung im Ausriss von zwischen zwei Platten applizierter Klebdichtmasse,

Figur 7: eine Seitenansicht der Verbindung von Figur 6 mit teilweise herausgezogener Klebdichtmasse,

Figur 8: eine räumliche Ansicht einer Fügeverbindung in verkleinerter Darstellung,

Figur 9: eine Seitenansicht der Fügeverbindung von Figur 8 im Schnitt ohne Klebdichtmasse,

Figur 10: eine vergrößerte Darstellung der Einzelheit X von Figur 9 mit Klebdichtmasse,

Eine Fügeverbindung 5 besteht im Wesentlichen aus einem ersten Bauteil 6, einem zweiten Bauteil 7, einem Dichtungsbett 8 und einer Klebdichtmasse 1.

Nach dem Fügen des Verbundes bzw. der beiden Bauteile 6, 7 kann dieser wieder getrennt werden, indem ein aus der Fügeebene bzw. dem Dichtungsbett 8 herausstehender Teil 30 der Klebdichtmasse 1 oder eines extra mit der Klebemasse verbundenen Teiles als "Anfasser" oder ein "Öffner" verwendet wird. Dazu wird die Klebeverbindung des Verbundes bzw. der beiden Bauteile 6, 7 gelöst, indem an dem "Anfasser" in Richtung der Klebeebene, d. h. in Verlängerung der ebenen von den beiden Bauteilen 6, 7 weggerichteten Verlaufsrichtung 16 des Dichtungsbettes 8 gezogen wird, so dass die Klebdichtmasse 1 nahezu rückstandsfrei aus dem Dichtungsbett 8 herausgezogen wird.

Dazu muss die Klebemasse bzw. Klebdichtmasse 1 eine minimale Reißdehnung aufweisen. Diese wird im Zugversuch bei einer Deformationsgeschwindigkeit von 500 mm/min und einer freien Probenlänge von 30 mm bis 100 mm bestimmt. Die so ermittelte Reißdehnung beträgt insbesondere mehr als 300 %, vorzugsweise mehr als 800 %.

Das Relaxationsverhalten des Klebstoffs wird bestimmt an einer Probe von 30 mm bis 100 mm freier Einspannlänge mit einem Vorschub von 1900 mm/sec und bei einer Dehnung auf 300 %. Dabei lässt der Klebstoff nach 10 Sekunden einen Abfall der Spannung nicht unter 35 % der maximalen Spannung zu, und nicht unter 25 % der maximalen Spannung nach 60 Sekunden. Vorzugsweise liegt der Spannungsabfall nicht unter 50 % nach 10 Sekunden und nicht unter 40 % nach 120 Sekunden.

Erfindungsgemäß wurde festgestellt, dass bei hochelastischen Klebstoffen die besondere Eigenschaft, dass je nach Zugrichtung bzw. Schälwinkel extrem unterschiedliche Werte für die Haftung auf den Substraten erhalten wurden. Es konnte gezeigt werden, dass bei Schälwinkeln über 90° hinaus Kohäsionsbrüche im mittleren Bereich der Hotmeltraupen auf beiden obengenannten Substraten auf hohem Abzugskraftniveau erreicht wurden, während die Lösbarkeit bei kleinen Schälwinkeln, dass heißt $<30°$ vollständig adhäsiv auf vergleichsweise niedrigem Abzugskraftniveau erfolgte.

Es wurden erfindungsgemäß Modellrezepturen gemischt, um diese Eigenschaft im Extrem zu untersuchen. In diesen war ein hoher Anteil elastischer, wenig relaxierender Komponenten zugegen. Daraus konnten mittels Hotmeltabdichtmasse abgedichtete Scheinwerfer hergestellt werden, die wieder zu öffnen waren. Dabei wurden erstmals keine Reste der Dichtungsmasse auf den Substraten hinterlassen. Es fiel auf, dass das Öffnen über zwei Mechanismen erfolgen könnte, ohne sich an die Hypothese binden zu wollen:

1.) Die Abschlußscheibe wurde mit sehr hohen Kräften entgegengesetzt der Fügerichtung aus dem Klebebett gedrückt. Dieses war manuell kaum möglich und barg die Gefahr der Zerstörung der Scheibe in sich.

2.) Der Hotmelt konnte an einem bei der Applikation ausgeformten Anfasser im Winkel von 90° relativ zur Fügerichtung, ähnlich einem Weckgummi, aus dem Abdichtbett herausgezogen werden. Dieser Vorgang ließ sich mit geringem Kraftaufwand durchführen.

Diesen Vorgängen liegt ein allgemeines, nicht auf eine bestimmte Klasse von elastomeren Materialien beschränktes Prinzip zugrunde. Dieses ist für die Erlangung der Fähigkeit, unter praktischen Gesichtspunkten leicht herzustellende, leicht zu öffnende Deckel/Gehäuseabdichtungen mit sauberer Trennung in die Komponenten Gehäuse, Deckel, Dichtmasse ohne restliche Materialanhaftungen aneinander zu erhalten, von hohem Wert.

Besonders interessant ist, dass diese Materialien, wenn sie wie im obigen Beispiel genannt ausgeführt werden, in der bisher etablierten Fertigung auf offenen Tankschmelzanlagen, beispielsweise in Gehäusen von Scheinwerfern eingetragen werden können. Als nachteilig stellte sich bei obengenannten Versuchen heraus, dass die bisherige Ausführung des Abdichtbettes unter dem Aspekt des Wiederöffnens zwei Negativpunkte zeigt:

1.) Da die Dichtmasse volumenmäßig betrachtet in zwei Hauptkompartimenten beidseitig des Abschlußscheibenfußes angeordnet vorliegt, muss die im Scheinwerferinneren liegende Masse durch den engen Bereich unter dem Fuß hervorgezogen werden, um nach außen hin entfernt werden zu können.

2.) Die Dichtmasse muss eine größere Breite quer zur Abdichtbettlinie einnehmen, um auftretende Deformationen ohne zu große Materialstreckung und Einschnürung aufnehmen zu können.

Wichtig ist in diesem Zusammenhang, dass die Wiederlösbarkeit nicht zu vorzeitigen Ausfällen während des Gebrauchs bei allen hierbei auftretenden Deformationen, Temperaturen und Kräften, auch als Funktion der Belastungszeit und unter Medieneinfluss führt. Dazu werden folgende theoretische Überlegungen angestellt:

Bei dem Gebrauch einer Klebverbindung in der hier angedachten Ausführung greifen Kräfte an einzelnen Stellen der zu fügenden Bauteile an und werden bedingt durch die Steifigkeit dieser Materialien flächig auf den Klebdichtstoff verteilt. Die einzelnen dabei auftretenden Belastungsformen zeigt Fig. 1.

Die Belastungsform, bei welcher die Substrate fixiert sind und nur an dem Klebdichtstoff in erfindungsgemäßer Weise eine hohe Deformation erzeugt wird, tritt im Gebrauch nicht auf. So kann verdeutlicht werden, auf welche Art das Kriterium zwischen den Einsatzformen "Gebrauch" und "Demontieren" eines solches Verbundes erzeugt wird. Allgemein gilt, dass die kohäsive Festigkeit einer solchen Klebdichtmasse höher sein muss als die adhäsive Festigkeit. Daraus folgt, dass die konstruktive Auslegung dieses Verbundes in einer geeigneten Weise ausgeführt werden muss, um den gewünschten Erfolg zu erzielen.

Die zu der Herstellung einer solchen Verbindung benötigte Klebdichtmasse wird insbesondere als pumpfähiges Material bereitgestellt und auf den Kleb- und Abdichtbereich der Substrate appliziert. Bevorzugt handelt es sich dabei um heißschmelzende Klebdichtmassen, welche mit sehr schnellem Abbindeverhalten im industriellen Fertigungsprozess angewendet werden können. Dadurch wird ein vereinfachter Fertigungsablauf des gewünschten Produkts erreicht, und zeit- und vorrichtungserfordemde, nicht unmittelbar zu der Montage des gewünschten Produkts gehörende Arbeitsschritte können auf ein Minimum reduziert werden.

Die Klebdichtmasse überträgt bei Belastungen, die im Betrieb auftreten, keine höheren mechanischen Spannungen von einem Substrat auf andere, die für eines dieser Substrate zu Schäden führen könnte. Deformationen im Verbund treten vorzugsweise in der Klebdichtmasse auf, bei hohen und sehr niedrigen Temperaturen. Andererseits ist die Nachgiebigkeit der Klebdichtmasse so klein, dass bei punktuellen Belastungen dieser, wie sie beispielsweise beim Auftreffen eines gebündelten Wasserstrahls aus der Düse eines Hochdruckreinigers entsteht, kein Versagen des Verbundes durch Undichtwerden auftritt. Eine gute Haftung auf den Substraten wird gefordert, um den dichten Abschluss zu gewährleisten.

Das Lösen erfolgt bei Umgebungstemperatur, in dem an der Klebdichtmasse selbst gezogen wird. Dabei wird zum Beispiel an einem aus der Klebdichtmasse geformten oder an diese angebrachten und/oder in diese eingelegten, nach außen herausragenden Anfasser gezogen, während eines oder mehrere der gefügten Teile fixiert sind.

Bei dem Lösevorgang muss die Klebdichtmasse eine große Querkontraktion bei Zugbelastung zeigen, um von den Substraten entfernt werden zu können. Dazu sollte das Material ein hoch elastisches Verhalten mit einem Dehnvermögen >300 %, besser noch >800 % aufweisen, ohne abzureißen, siehe Fig. 2. Fig. 2 zeigt einen Dehnversuch an einem Prüfkörper aus dem Material der Beispielrezeptur 1. Zusätzlich darf es keine wesentliche Spannungsrelaxation in dem Zeitablauf des Wiederlösevorgangs zulassen, siehe Fig. 3. Fig. 3 zeigt einen Relaxationsversuch an einem Prüfkörper aus dem Material der Beispielsrezeptur 1 nach einer Dehnung von 300 %.

Befindet sich ein elastomeres Material auf der Temperaturskala oberhalb seines Glasüberganges und wird

gedehnt, so tritt eine Querkontraktion auf. Die Messung des Glasüberganges erfolgt in der bekannten Weise mittels eines oszillierend messenden mechanischen Spektrometers. Dabei ist interessant, in welchem Bereich der Belastungszeit, ausgedrückt als inverse Messfrequenz, der Glasübergang in einem Material stattfindet. Kriterium für den Glasübergang ist der Abfall des Speichermoduls G' oder das Maximum des Verlustmodul G". Siehe dazu die Fig. 4. Fig. 4 zeigt viskoelastische Spektren des Materials der Beispielrezeptur 1 als Funktion der Temperatur, ermittelt im linear viskoelastischen Bereich der Deformation. Die Querkontraktion kann nun wie folgt beschrieben werden:

$$\frac{\Delta b}{b} = \frac{-\mu \times \Delta a}{a} \qquad \text{I}$$

wobei b für die Dicke des Volumenelements 90° im Winkel zu der Zugrichtung und a für die Länge des Volumenelements in Zugrichtung steht.

Fig. 5 zeigt ein Element eines gummielastischen Körpers vor (2.a) und nach (2.b) einer Dehnung.

Dabei ist die Querkontraktionszahl μ eines gummieelastischen Körpers nahe 0,500. Wird eine Raupe aus einem solchen Material aus einem Spalt gezogen, so tritt eine starke Querkontraktion des nicht mehr unmittelbar mit dem Substrat verbundenen Klebdichtstoffes auf, siehe Fig. 6 und 7. In dem angrenzenden Bereich zwischen Raupe und Substrat, der als vorderste Rissfront vorliegt, ist nun eine sehr hohe Spannung zu bemerken. Dadurch versagt dieser Bereich, wenn fortlaufend weiter an der Klebdichtstoffraupe gezogen wird, bis der gesamte Klebdichtstoff rückstandsfrei vom Substrat gelöst ist. Bei diesem Vorgang wird in dem fortschreitenden Riss der Wert für die Haftfestigkeit des Klebdichtstoffes auf dem Substrat überschritten. Damit die herauszuziehende Raupe nicht "blockt", muss die Querkontraktion so groß sein, dass der Klebdichtstoff im gedehnten Zustand immer einen kleineren Durchmesser hat als eventuell vorhandene Verengungen, beispielsweise des Abdichtbettes und entlang des Auszugsweges der Raupe. Eine große Querkontraktion wird durch hohe Deformationen erzeugt.

Damit das Material bei einem solchen Vorgang nicht kohäsiv durchreißt oder die zum weiteren Fortschreiten des adhäsiv versagenden Risses notwendige Spannung verliert, darf es in dem für die Trennoperation benötigten Bereich der Zeit nicht wesentlich relaxieren.

Bei der Anwendung dieses Prinzips ist zu beachten, dass es im Anwendungsfall eine minimale Klebdichtstoffdicke gibt, unterhalb der die Raupe bei dem Trennen des Verbundes nicht mehr adhäsiv, sondern kohäsiv versagt. Da die Breite des Abdichtbettes und damit die Klebdichtstoffraupe nicht beliebig klein werden kann, nimmt also die Dicke dieser Raupe bei einer Querschnittsverminderung ab. Die Gründe für einen solchen minimalen Wert für die Abdichtbettbreite können in konstruktiv bedingten Forderungen oder einfach in dem Umstand begründet liegen, dass applikationstechnisch keine kleinere Raupe erzeugt werden kann. Die Abzugskraft ist direkt proportional der Breite einer Raupe, da diese der adhäsiv wirksamen benetzten Oberfläche proportional ist. Überschreitet diese Abzugskraft die maximale Reißlast des Materials, die der Raupenquerschnittsfläche direkt proportional ist, so wird kohäsives und damit unerwünschtes Versagen auftreten. Bei dieser vereinfachten Betrachtung werden beispielsweise Randeffekte nicht berücksichtigt, so dass bei der praktischen Umsetzung Sicherheitszuschläge gewährt werden müssen. Die Beziehung, nach der die minimale Klebdichtstoffdicke einer zweiseitig benetzten Klebdichtstoffraupe berechnet werden kann, lautet dann:

$$d_{min} / [mm] = \frac{F_s/[N/mm]}{F_{Rm}/[N/mm^2]} \qquad \text{II}$$

wobei

$d_{min}$ für die Dicke des Klebdichtstoffes zwischen zwei planparallel angeordneten Substraten
$F_s$ für die Schälkraft und
$F_{Rm}$ für die maximale Reißlast steht.

Bei sehr tiefen Temperaturen, beispielsweise bei -30 °C ist der Klebstoff noch nicht spröde oder zu hart, da sonst die Fähigkeit, Kräfte kohäsiv zu übertragen, plötzlich stark zunimmt, ohne dass die Adhäsion im selben Maße ansteigen könnte. Eine ausreichende Kälteflexibilität ist daher erfindungsgemäß erforderlich.

Für die Verarbeitung von besonders bevorzugten Heißschmelzklebdichtmassen als besondere Form der erfindungsgemäßen Klebstoffe ist dagegen wichtig, dass die Masse oberhalb der maximal anzunehmenden Gebrauchstemperatur fließfähig genug ist, um von den gebräuchlichen Auftragsanlagen für Heißschmelzklebstoffe gefördert zu werden.

Ein herkömmlicher Heißschmelzklebdichtstoff kann bei gegebener ausreichender Festigkeit bei Raumtemperatur nicht Tankschmelzanlagen-verarbeitbar sein. Erst durch den Einsatz von Polyisobutylen für die Kälteflexibilität,

Harzen für die Haftung auf den Substraten, thermoplastischen Elastomere für die kohäsive Festigkeit und die Schmelzflüssigkeit in Kombination mit gegebenenfalls teilweise gepfropften Poly-α-olefinen kann das gewünschte Eigenschaftsprofil gemäß der vorliegenden Erfindung erhalten werden.

Thermoplastische Elastomere an sich sind im Stand der Technik bekannt. Hierunter versteht man Polymere, auch thermoplastische Kautschuke genannt, die im Idealfall eine Kombination der Gebrauchseigenschaften von Elastomeren und den Verarbeitungseigenschaften von Thermoplasten besitzen.

Dies kann erreicht werden, wenn in den entsprechenden Kunststoffen gleichzeitig weiche und elastische Segmente mit hoher Dehnbarkeit und niedriger Glasübergangstemperatur sowie harte kristallisierbare Segmente mit geringer Dehnbarkeit, hoher Glasübergangstemperatur und Neigung zur Assoziatbildung vorliegen. Kennzeichnend für thermoplastische Elastomere sind thermolabile reversible spaltbare Vernetzungsstellen, meist physikalischer aber auch chemischer Art. Erfindungsgemäß sind die thermoplastischen Elastomere bevorzugterweise ausgewählt aus Styroltypen, insbesondere SBS, SIS, SEBS, SEPS und Block-Polystyrol-(Block-Poly(Ethylen-Butylen), und Block-Polystyrol-(Block-Poly(Ethylen-Butylen) mit 1 bis 10 Block-Styroleinheiten je Molekül, die gegebenenfalls mit Block-Polyisopren oder Block-Butadieneinheiten modifiziert sind sowie aus Elastomerlegierungen, insbesondere EPDM/PP, NR/PP, EVA/PVDC und NBR/PP sowie aus Polyurethanen, Polyetherestern und Polyetheramiden. Die thermoplastischen Elastomere bewirken insbesondere die kohäsive Festigkeit der erfindungsgemäßen Heißschmelzklebdichtstoffe.

Besonders die kohäsive Festigkeit kann durch den erfindungsgemäßen Einsatz von wenigstens teilweise gepfropften thermoplastischen Elastomeren erhöht werden, wenn nach der Verarbeitung des Heißschmelzklebstoffs durch diese eine chemische Nachvernetzung stattfindet. Erfindungsgemäß wird dadurch die kohäsive Festigkeit bei erhöhten Temperaturen deutlich verbessert und die Spannungsrelaxation bei dem Trennvorgang des Verbundes klein gehalten.

In einer bevorzugten Ausführungsform der vorliegenden Erfindung sind die gegebenenfalls gepfropften Poly-α-olefine ausgewählt aus amorphen Poly-α-olefinen, den Mono-, Co- oder Terpolymere der Monomeren Ethen, Propen, 1-Buten, 1-Penten und 1-Hexen oder einem Poly-α-olefin der allgemeinen Formel (I)

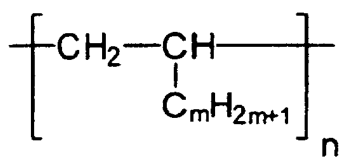

mit

m = 0 bis 15 und
n = 5 bis 50000

Diese Polyolefine bedingen die notwendige Haftung auf den Substraten. Besonders bevorzugt weisen die Poly-α-olefine Teilkristallinität auf, so dass besonders bevorzugte Poly-α-olefine insbesondere Polyethylen, Polypropylen und/oder Poly-1-buten hohe Taktizität in dem kristallinen Bereich aufweisen.

Gegebenenfalls können die eingangs definierten Poly-α-olefine und die thermoplastischen Elastomere mit weiteren Verbindungen gepfropft werden. Besonders bevorzugt ist die statistische Pfropfung mit olefinisch ungesättigten Verbindungen, die insbesondere ausgewählt sind aus Maleinsäureanhydrid, Itaconsäureanhydrid, Tetrahydrophthalsäureanhydrid und Verbindungen der allgemeinen Formel (II)

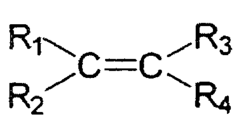

wobei
$R_1$ für Reste

a)

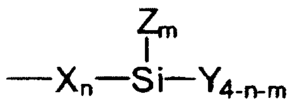

wobei
Z für Wasserstoff, einen Methylrest oder einen Phenylrest
X für

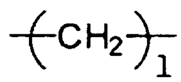

oder

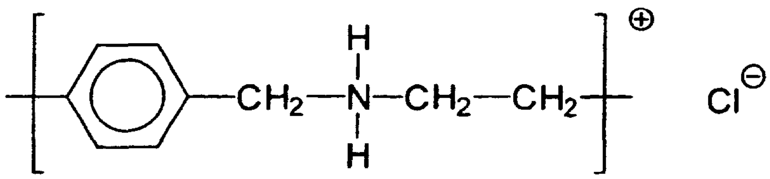

Y für eine beliebige hydrolisierbare Gruppe
m für eine ganze Zahl 0, 1 oder 2
n für eine ganze Zahl 0, 1 oder 2 und
l für eine ganze Zahl 1, 2, 3, 4, 5 oder 6 oder
b)

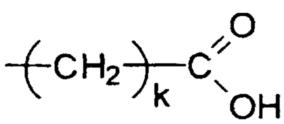

k für eine ganze Zahl 0, 1 oder 2

$R_2$ für Wasserstoff oder Methyl
$R_3$ für einen Rest $R_1$, Wasserstoff oder Methyl und
$R_4$ für Wasserstoff oder Methyl
stehen.

Der Anteil der gepfropften Poly-$\alpha$-olefine kann erfindungsgemäß bis zu 50 Gew.-%, insbesondere 10 bis 50 Gew.-%, bezogen auf den Gesamtgehalt an Poly-$\alpha$-olefinen umfassen.

Der Anteil an gepfropften thermoplastischen Elastomeren kann, bezogen auf den Gehalt an thermoplastischen Elastomeren 0 bis 100 Gew.-% betragen.

Neben den gepfropften Poly-$\alpha$-olefinen sind die vorwiegend modifizierten aliphatischen Harze für die Haftung auf den Substraten besonders verantwortlich. Diese werden vorzugsweise ausgewählt aus den polymerisierten Monomeren des $C_5$ bis $C_9$-Siedeschnittes der Petroldestillation, die nicht, teilweise oder vollständig hydriert sind und natürlichen Kolophoniumharzen und deren Modifikationen; Terpenharzen; Polyterpenharzen des $\beta$-Pinen, $\alpha$-Pinen und/oder des $\delta$-Limonen; Harzen erhältlich durch Copolymerisation von Terpen mit Monomeren aus dem $C_5$ bis $C_9$-Schnitt der Petroldestillation und Terpenphenolharzen.

Die erfindungsgemäß einzusetzenden Polyisobutylene sind, wie eingangs erwähnt, für die Kälteflexibilität verantwortlich. Definitionsgemäß schließen die Polyisobutylene im Sinne dieser Erfindung, insbesondere Polyisobutylenöle und copolymere Polyisobutylene ein. Besonders bevorzugt sind die Polyisobutylene aus dem homopolymeren Isobutylen, insbesondere aus Homopolymeren des Isobutylen mittleren Molekulargewichts, bestimmt mittels Gelpermeationschromatographie im Bereich von 20 000 bis 5 000 000 g x $mol^{-1}$, Copolymeren des Isobutylens und eines konjugierten Diens in einer Menge von 0,3 bis 4,5 mol.-% bezogen auf das Copolymer und/oder Terpolymeren des Isobutylens, Divinylbenzols in einer Menge von 0,01 bis 4,5 mol.-%. und dem genannten konjugierten Dien.

Die Kälteflexibilität wie die Schmelzviskosität werden durch die Öle wie Oligomeren oder Polymeren des iso-Butens und 1-Butens mit einem mittleren Molekulargewicht von 200 bis 20 000 g x $mol^{-1}$ mittels Gelpermeationschromatographie bestimmt, und durch Petroldestillation gewonnene und gegebenenfalls modifizierte naphten- oder paraffinbasische Öle in dem selben Molekulargewichtsbereich günstig beeinflusst. Der Anteil derartiger Öle sollte erfindungsgemäß im Bereich von 0 bis 65 Gew.-%, bezogen auf den Heißschmelzklebdichtstoff, liegen.

Weiterhin können die erfindungsgemäßen Heißschmelzklebdichtstoffe 0 bis 80 Gew.-%. insbesondere 15 bis 30 Gew.-% Polyisopren oder Polybutadien, insbesondere gepfropftes Polyisopren oder Polybutadien enthalten.

Neben den obengenannten organischen polymeren Kunststoffmaterialien können die erfindungsgemäßen Heißschmelzklebdichtstoffe auch weitere Füllstoffe, sowie insbesondere aromatische Harze und/oder Stabilisatoren sowie Haftvermittler wie beispielsweise organofunktionelle Silane enthalten.

Besonders bevorzugt ist der Einsatz von 0 bis 50 Gew.-%, insbesondere 0 bis 40 Gew.-%, Füllstoffe und/ oder 0 bis 25 Gew.-%, insbesondere 0 bis 10 Gew.-% aromatische Harze und/oder Stabilisatoren.

Die Füllstoffe können insbesondere ausgewählt sein aus anorganischen Füllstoffen, beispielsweise Calciumcarbonat, Calciumhydroxid, Dolomit, Titandioxid, Zinkoxid, Siliciumoxid, Schwerspat und Braunstein sowie aus organischen Füllstoffen, insbesondere Ruß.

Die in den erfindungsgemäßen Heißschmelzklebdichtstoffen gegebenenfalls enthaltenen Stabilisatoren und Lichtabsorber sind vorzugsweise ausgewählt aus der Gruppe der Epoxide, sterisch gehinderten Phenolen, Aminen, Thioestern, Phosphiten sowie Triazin-, Piperidin- und Benzotriazolen.

<u>Ausführungisbeispiel:</u>

Alle beschriebenen Rohstoffe werden nachfolgend definiert:

In einem auf 150 °C temperierten Zweiwellenkneter wurde Polyisobutylen vorgelegt. Dazu gab man etwa ¼ der Gesamtmenge des weichmachenden Öls und mischte etwa 30 Minuten. Zu dieser homogenisierten Masse gab man das thermoplastische Elastomer. Danach wurden gegebenenfalls erforderliche Endblockharze, Füllstoffe und Stabilisatoren zugesetzt und weitere 20 Minuten gemischt. Zu dieser Mischung wurde in zwei Portionen je die Hälfte an Klebharz und Poly-$\alpha$-olefin gegeben, die gegebenenfalls gepfropft sein konnten. Diese Mischung wurde nach jeder Zugabe weitere 15 Minuten geknetet. Anschließend wurde der Rest, als ½ der Gesamtmenge an weichmachenden Ölen zugesetzt und weitere 30 Minuten gemischt, bis eine homogene Heißschmelzklebdichtstoffmasse aus dem Kneter entnommen wurde.

Beispielsrezeptur 1:

| Gew. -Teile | Stoff | Beschreibung |
|---|---|---|
| 0,4 | 2,6-Di-tert-butyl-4-methylphenol | **Stabilisator:** |
| 0,02 | Flammruß 101 | **Füllstoff:**<br>Ruß, Dibutylphtalatabsorption 110-115 ml (DPB)/100 g Ruß |
| 3,0 | Vistanex® MM-L80 | **Weichmachende Oele und Flexibilisatoren:**<br>Polyisobutylen, Molekulargewicht durch Gelpermeationschromatographie gegen Polystyrolstandards ermittelt durch 830.000 g/mol |
| 30,5 | Parapol ®1300 | **Weichmachende Oele und Flexibilisatoren:**<br>Polyisobutylen, Molekulargewicht durch Gelpermeationschromatographie gegen Polystyrolstandards ermittelt durch 2100 g/mol |

(fortgesetzt)

| Gew. -Teile | Stoff | Beschreibung |
|---|---|---|
| 25,0 | Kraton® G 1652 | **Thermoplastische Elastomere:** Lineares Styrolblockcopolymer vom S-EB-S-Typ 29 % Styrol |
| 6,0 | Vestoplast ®608 | **Poly-α-olefin:** Copolymeres Poly-α-olefin mit hohem 1-Butengehalt Erweichungstemperatur (R&K) =90°C, $T_G$ = -31°C |
| 15,0 | Escorez ®4401 | **Klebrigmachende Harze:** Aliphatisches Harz mit aromatischen Gruppen Erweichungspunkt (R&K) = 95 °C |
| 5,0 | Hydrogral ®P | **Klebrigmachende Harze:** Hydriertes, mit Pentaerythrit verestertes Naturharz Erweichungspunkt (R&K) = 109 °C |
| 10,0 | Kreide | **Füllstoff:** |

Dieses Material wurde in Bezug auf seine Verarbeitungsviskosität, seiner dynamisch-mechanisch ermittelten Glastemperatur und sein Anfließverhalten untersucht. Zusätzlich wurde das Schälverhalten auf gereinigten Glasoberflächen und spritzfrischem Polypropylen bestimmt, wobei diese Messung im wichtigen Bereich von Schälwinkeln <10° durchgeführt wurde. Letztlich wurde das Dehnverhalten bis zum Bruch aufgezeichnet, um mit diesen Daten die Berechnungsgrundlage für Gleichung II zu liefern, sowie die Hysteresekurve, um die Spannungsrelaxation und die bei der Dehnung geleistete Arbeit zu beschreiben:

Tabelle 1:

| Schälversuch der Klebdichtmasse zwischen Glas und PP mit der Beispielsrezeptur 1 | |
|---|---|
| Dehnung/[%] | 203,8 |
| Linienbreite d. benetzten Oberfläche/[mm] | 24,0 |
| Abzugskraft/[N] | 19,6 |
| Schälkraft $F_s$/[N/mm] | 0,82 |
| Schälwinkel/[°] | 0 |

Tabelle 2:

| Dehn- und Hystereseversuch mit der Beispielsrezeptur 1 | |
|---|---|
| Reißlast $F_{Rm}$/[N/mm$^2$] | 3,48 |
| bei Dehnung/[%] | 1103 |
| Hysteresearbeit/[J] | 0,062 |

Tabelle 3:

| Viskositätsdaten zu der Beispielrezeptur 1 | | | |
|---|---|---|---|
| | Viskosität η/[Pas] | | |
| Schergeschwindigkeit Y/[1/s] | Temperatur ζ/[°C] | | |
| | 170 | 190 | 210 |
| 0,056 | 366 | 97 | 31 |
| 0,10 | 347 | 93 | 31 |
| 0,56 | 243 | 77 | 26 |
| 1,0 | 216 | 67 | 23 |

Tabelle 3: (fortgesetzt)

| Viskositätsdaten zu der Beispielrezeptur 1 | | | |
|---|---|---|---|
| | Viskosität η/[Pas] | | |
| Schergeschwindigkeit Y/[1/s] | Temperatur ζ/[°C] | | |
| | 170 | 190 | 210 |
| 5,6 | 124 | 53 | 18 |
| 10 | 61 | 48 | 17 |

Tabelle 4:

| Viskoelastische Daten zu der Beispielsrezeptur 1 | |
|---|---|
| Glastemperatur (G" = max.)/[°C] | -36 |
| tan δ (175°C) /[] | 3,55 |

Verarbeitung der Klebdichtmasse aus der Beispielsrezeptur 1 zu einem Verbund:

Verarbeitungsbeispiel 1:

Im folgenden Beispiel beziehen sich die in Klammern gesetzten Zahlen auf die Bezugszeichen der Figuren 6 und 7:

Die nach obiger Beispielsrezeptur 1 hergestellte und beschriebene Klebdichtmasse (1) wurde aus einer beheizbaren Kartuschenpistole auf eine Platte (4) aus Polypropylen appliziert. Am Ende des Auftragsweges wurde ein Stück Trennpapier so mit dem Raupenende beschichtet, dass hieraus der "Anfasser" (2) zum späteren Trennen des herzustellenden Verbundes gebildet wurde. Noch vor dem Erkalten der Klebdichtmasse wurde eine weitere Polypropylenplatte (3) flächig gegen die erstgenannte Platte gesetzt und auf die heiße Masse gedrückt, so dass ein Abstand zwischen diesen von 1 mm nicht unterschritten wurde. Nach dem Gebrauch wurde der Verbund getrennt, indem an dem "Anfasser" (2) eine Zugkraft in Richtung weg von der Trennfuge, aber in der Trennebene liegend, ausgeübt wurde. Dabei fixierte man eines oder beide Substrate (3), (4). Die heißschmelzende Klebdichtmasse (1) ließ sich nun restfrei aus der Trennebene herausziehen und man erhielt die drei Komponenten voneinander getrennt zurück.

Verarbeitungsbeispiel 2:

Die nach obigem Beispiel hergestellte und beschreibende Klebdichtmasse wurde aus einer offenen Tankschmelzanlage gefördert und in das Abdichtbett eines Scheinwerfers, bestehend aus einer Glasabschlußscheibe und einem metallbedampften Metalldruckgußreflektor, appliziert. Der "Anfasser" wurde durch leicht nach dem Scheinwerferäußeren geneigtes, vertikales, langsames Abheben der Förderdüse bei geringer Weiterförderung der heißaufschmelzenden Klebdichtmasse durch Abkühlen an der Luft ausgebildet. Der nächste Verarbeitungsschritt bestand im Fügen des Reflektors mit der Glasabschlußscheibe.

Nach dem bestimmungsgemäßen Gebrauch des Scheinwerfers wurde durch das Aufbringen von einer Zugkraft, aus der Abdichtbettöffnung herausgerichtet, der "Anfasser" mitsamt der Klebdichtmasse aus dem Abdichtbett des Scheinwerfers herausgezogen. Der Scheinwerfer stand nun für eine Reparatur durch das Einbringen neuer Klebdichtmasse oder für eine stoffliche Wiederverwertung zur Verfügung.

Der "Anfasser" kann beispielsweise dann weggelassen werden, wenn eine Vorrichtung als "Öffner" verwendet wurde, die erst zu dem Lösen des Verbundes mit der Klebdichtstoffraupe in Verbindung gebracht wurde. Beispielhaft konnte dieses geschehen, indem die Klebdichtstoffraupe durchstoßen wurde und man diese an einem am "Öffner" angeformten Haken aus dem Abdichtbett hervorzog. Dadurch erfolgte in der weiteren Folge das Lösen des Verbundes.

## Patentansprüche

**1.** Heißschmelzklebstoff, bestehend aus Klebstoff der nicht-drucksensitive ist,
durch Schälwirkung bei kleinen Schälwinkeln restlos entfernbar ist,
bei Applikationstemperatur fließfähig ist
und der

i) an sich bekannte Zusätze, insbesondere Füllstoffe, Stabilisatoren, Farbstoffe, Ruß und/oder Feuchtigkeitsabsorber enthält,
ii) Polyisobutylen oder weichmachendes Öl enthält,
iii) Klebeharze enthält und
iv) **gegebenenfalls** Endblockharze sowie
v) gegebenenfalls thermoplastische Elastomere, welche gegebenenfalls gepfropft sein können, enthält sowie
vi) gegebenenfalls Poly-$\alpha$-olefine, welche gegebenenfalls gepfropft sein können, enthält.

**2.** Klebstoffe nach Anspruch 1, **dadurch gekennzeichnet, dass** die thermoplastischen Elastomere ausgewählt sind aus Styroltypen, insbesondere SBS, SIS, SEBS SEPS und Block-Polystyrol-(Block-Poly(Ethylen-Butylen), und Block-Polystyrol-(Block-Poly(Ethylen-Butylen) mit 1 bis 10 Block-Polystyroleinheiten je Molekül, die gegebenenfalls mit Block-Polyisopren oder Block-Butadieneinheiten modifiziert sind; Elastomerlegierungen, insbesondere EPDM/PP, NR/PP, EVA/PVDC und NBR/PP; Polyurethan; Polyetherestern und Polyamiden.

**3.** Klebstoffe nach Anspruch 1, **dadurch gekennzeichnet, dass** die wenigstens teilweise gepfropften Poly-$\alpha$-olefine ausgewählt sind aus amorphen Poly-$\alpha$-olefinen, den Mono-, Co- oder Terpolymere der Monomeren Ethen, Propen, 1-Buten, 1-Penten und 1-Hexen oder einem Poly-$\alpha$-olefin der allgemeinen Formel (I)

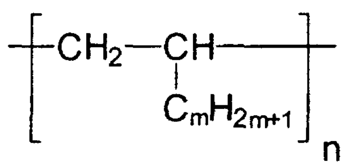

mit

m = 0 bis 15 und
n = 5 bis 50000

**4.** Klebstoffe nach Anspruch 3, **dadurch gekennzeichnet, dass** die Poly-$\alpha$-olefine Teilkristallinität aufweisen und insbesondere Polyethylen, Polypropylen und/oder Poly-1-buten umfassen, die in den kristallinen Bereichen hohe Taktizität aufweisen.

**5.** Klebstoffe nach Anspruch 3 oder 4, **dadurch gekennzeichnet, dass** die Poly-$\alpha$-olefine mit olefinisch ungesättigten Verbindungen statistisch gepfropft werden, die insbesondere ausgewählt sind aus Maleinsäureanhydrid, Itaconsäureanhydrid, Tetrahydrophthalsäureanhydrid und Verbindungen der allgemeinen Formel (II)

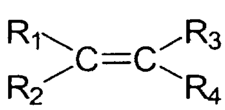

wobei
$R_1$ für Reste

a)

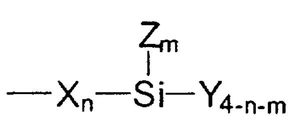

wobei
Z für Wasserstoff, einen Methylrest oder einen Phenylrest

X für

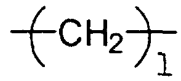

oder

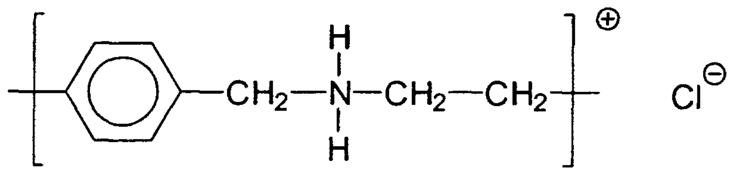

Y für eine beliebige hydrolisierbare Gruppe
m für eine ganze Zahl 0, 1 oder 2
n für eine ganze Zahl 0, 1 oder 2 und
l für eine ganze Zahl 1, 2, 3, 4, 5 oder 6 oder
b)

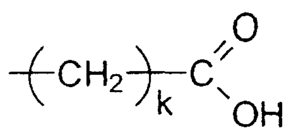

k für eine ganze Zahl 0, 1 oder 2

$R_2$ für Wasserstoff oder Methyl
$R_3$ für einen Rest $R_1$, Wasserstoff oder Methyl und
$R_4$ für Wasserstoff oder Methyl
stehen.

6. Klebstoffe nach Anspruch 1, **dadurch gekennzeichnet, dass** die Menge an gepfropften Poly-α-olefinen 0 bis 100 Gew.-% bezogen auf den Gesamtgehalt an Poly-α-olefinen beträgt.

7. Klebstoffe nach Anspruch 1, **dadurch gekennzeichnet, dass** die thermoplastischen Elastomere mit olefinisch ungesättigten Verbindungen statistisch gepfropft werden, die insbesondere ausgewählt sind aus Maleinsäureanhydrid, Itaconsäurenahydrid, Tetrahydrophthalsäureanhydrid und Verbindungen der allgemeinen Formel (II).

8. Klebstoffe nach Anspruch 1, **dadurch gekennzeichnet, dass** der Anteil an gepfropften thermoplastischen Elastomeren, bezogen auf den Gesamtgehalt der thermoplastischen Elastomeren 0 bis 100 Gew.-% beträgt.

9. Klebstoffe nach Anspruch 1, **dadurch gekennzeichnet, dass** die Klebeharze ausgewählt sind aus polymerisierten Monomeren des petrochemischen $C_5$ bis $C_9$-Siedeschnitts, die nicht, teilweise oder vollständig hydriert sind und natürlichen Kolophoniumharzen und deren Modifikationen; Terpenharzen; Polyterpenharzen des β-Pinen, α-Pinen und/oder des δ-Limonen; Harzen erhältlich durch Copolymerisation von Terpen mit Monomeren aus dem $C_5$ bis $C_9$-Schnitt der Petroldestillation und Terpenphenolharzen.

10. Klebstoffe nach Anspruch 1, **dadurch gekennzeichnet, dass** diese Polyisobutylene aufweisen, insbesondere ausgewählt aus Homopolymeren des Isobutylens mittleren Molekulargewichts, bestimmt mittels Gelpermeationschromatographie im Bereich von 20.000 bis 5.000.000 g x $mol^{-1}$, Copolymeren des Isobutylens und eines konjugierten Diens in einer Menge von 0,3 bis 4,5 mol.-% bezogen auf das Copolymer und/oder Terpolymeren des

Isobutylens, Divinylbenzols in einer Menge von 0,01 bis 4,5 mol.-%. und dem genannten konjugierten Dien.

**11.** Klebstoffe nach Anspruch 1, **dadurch gekennzeichnet, dass** die Polyisobutylene oder weichmachenden Öle ausgewählt sind aus Polyisobutylölen, insbesondere Oligomere oder Polymere des iso-Butylens oder 1-Buten und durch Petroldestillation gewonnene, gegebenenfalls modifizierte naphthalen- oder paraffinbasische Öle mit einem mittleren Molekulargewicht, bestimmt durch Gelpermeationschromatographie im Bereich von 200 bis 20 000 g x $mol^{-1}$.

**12.** Klebstoffe nach einem der Ansprüche 1 bis 11, **dadurch gekennzeichnet, dass** sie
f) 0 bis 80 Gew.-%, insbesondere 15 bis 70 Gew.-% Polyisopren oder Polybutadien, insbesondere gepfropftes Polyisopren oder Polybutadien enthalten.

**13.** Klebstoffe nach einem der Ansprüche 1 bis 12, **dadurch gekennzeichnet, dass** sie
g) 0 bis 50 Gew.-%, insbesondere 0 bis 40 Gew.-%, Füllstoffe
h) 0 bis 25 Gew.-%, insbesondere 0 bis 10 Gew.-% aromatische Harze und/oder Stabilisatoren enthalten.

**14.** Klebstoffe nach Anspruch 13, **dadurch gekennzeichnet, dass** die Füllstoffe ausgewählt sind aus anorganischen Füllstoffen, insbesondere Calciumcarbonat, Calciumhydroxid, Calciumoxid, Dolomit, Titandioxid, Zinkoxid, Siliciumoxid, Schwerspat und Braunstein und organischen Füllstoffen, insbesondere Ruß.

**15.** Klebstoffe nach Anspruch 13, **dadurch gekennzeichnet, dass** die Stabilisatoren ausgewählt sind aus der Gruppe der Epoxide, sterisch gehinderten Phenole, Amine, Thioester, Phosphite sowie Triazin-, Piperidin- und Benzotriazole.

**16.** Klebstoffe nach einem der Ansprüche 1 bis 15, **dadurch gekennzeichnet, dass** sie Klebstoffe auf der Basis von Epoxidharzen, Silkonen, Polysulfiden, Polyurethane, Polyharnstoffe und/oder Acrylaten enthalten.

**17.** Verwendung von Klebstoffen nach einem oder mehreren der Ansprüche 1 bis 16, zur Verbindung von glasartigen Kunststoffsubstraten mit thermoplastischen oder duroplastischen Kunststoffsubstraten.

**18.** Verwendung nach Anspruch 17, **dadurch gekennzeichnet, dass** die glasartigen Kunststoffsubstrate ausgewählt sind aus Polymethylmethacrylat, Polycarbonat oder Cycloolefincopolymer und insbesondere die thermoplastischen Kunststoffsubstrate ausgewählt sind aus Polypropylen.

**19.** Verwendung nach Anspruch 17 oder 18, **dadurch gekennzeichnet, dass** man Lichtscheiben oder Streuscheiben mit Lampengehäusen von Fahrzeugleuchten oder Fahrzeugscheinwerfern lösbar verbindet.

**20.** Fahrzeugleuchten oder Fahrzeugscheinwerfer umfassend Lichtscheiben oder Streuscheiben, insbesondere mit Kratzfestausrüstung, aus glasartigem Kunststoffsubstrat und Lampengehäuse aus thermoplastischem oder duroplastischem Kunststoffsubstrat, **dadurch gekennzeichnet, dass** die Lichtscheiben oder Streuscheiben und Lampengehäuse mit einem Klebstoff wie in einem oder mehreren der Ansprüche 1 bis 18 definiert, verbunden sind.

## Claims

**1.** A hot-melt adhesive, consisting of an adhesive which is:

non-pressure-sensitive;
can be removed completely by a peeling action at small peeling angles; is flowable at the application temperature;

and which contains:

i) per se known additives, especially fillers, stabilizers, colorants, carbon black and/or moisture absorbents;
ii) polyisobutylene or a plastifying oil;
iii) adhesive resins; and
iv) optionally end block resins; and
v) optionally thermoplastic elastomers which may optionally be grafted; and

vi) optionally poly-α-olefins which may optionally be grafted.

**2.** The adhesives according to claim 1, **characterized in that** said thermoplastic elastomers are selected from styrene types, especially SBS, SIS, SEBS, SEPS and block polystyrene-(block-poly(ethylene-butylene)), and block polystyrene-(block-poly(ethylene-butylene)) having from 1 to 10 block polystyrene moieties per molecule, optionally modified with block polyisoprene or block butadiene moieties; elastomer alloys, especially EPDM/PP, NR/PP, EVA/PVDC and NBR/PP; polyurethane; Polyetheresters and polyamides.

**3.** The adhesives according to claim 1, **characterized in that** said poly-α-olefins, which are at least partly grafted, are selected from amorphous poly-α-olefins, homo-, co- or terpolymers of the monomers ethene, propene, 1-butene, 1-pentene and 1-hexene or a poly-α-olefin of general formula (I)

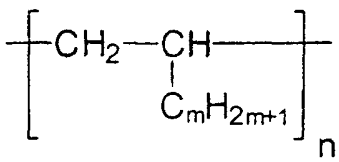

with

m = 0 to 15; and
n = 5 to 50,000.

**4.** The adhesives according to claim 3, **characterized in that** said poly-α-olefins have partial crystallinity and comprise, in particular, polyethylene, polypropylene and/or poly-1-butene which have high tacticity in the crystalline regions.

**5.** The adhesives according to claim 3 or 4, **characterized in that** said poly-α-olefins are randomly grafted with olefinically unsaturated compounds which are especially selected from maleic anhydride, itaconic anhydride, tetrahydrophthalic anhydride and compounds of general formula (II)

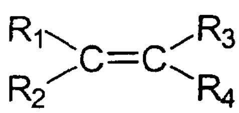

wherein
$R_1$ represents the following residues:

a)

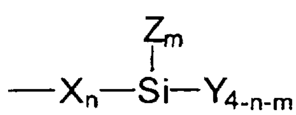

wherein
Z represents hydrogen, a methyl residue or a phenyl residue;
X represents

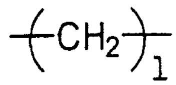

or

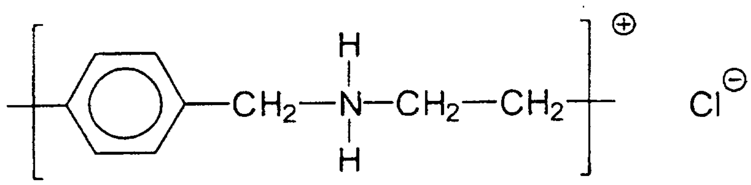

Y represents any hydrolyzable group;
m represents any of integers 0, 1 or 2;
n represents any of integers 0, 1 or 2; and
l represents any of integers 1, 2, 3, 4, 5 or 6; or
b)

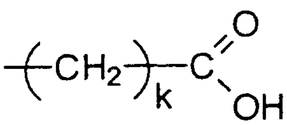

k represents any of integers 0, 1 or 2;

$R_2$ represents hydrogen or methyl;
$R_3$ represents a residue $R_1$, hydrogen or methyl; and
$R_4$ represents hydrogen or methyl.

6. The adhesives according to claim 1, **characterized in that** the amount of grafted poly-α-olefins is from 0 to 100% by weight, based on the total content of poly-α-olefins.

7. The adhesives according to claim 1, **characterized in that** the thermoplastic elastomers are randomly grafted with olefinically unsaturated compounds which are especially selected from maleic anhydride, itaconic anhydride, tetrahydrophthalic anhydride and compounds of general formula (II).

8. The adhesives according to claim 1, **characterized in that** the content of grafted thermoplastic elastomers is from 0 to 100% by weight, based on the total content of thermoplastic elastomers.

9. The adhesives according to claim 1, **characterized in that** the adhesive resins are selected from polymerized monomers of the petrochemical $C_5$ to $C_9$ cut which are not, partially or completely hydrogenated, and natural colophonium resins and their modifications; terpene resins; polyterpene resins of β-pinene, α-pinene and/or δ-limonene; resins obtainable by copolymerization of terpene with monomers from the $C_5$ to $C_9$ cut of petrol distillation and terpene phenol resins.

10. The adhesives according to claim 1, **characterized by** comprising polyisobutylenes, especially selected from homopolymers of isobutylene having an average molecular weight as determined by means of gel permeation chromatography within a range of from 20,000 to 5,000,000 $g \cdot mol^{-1}$, copolymers of isobutylene and a conjugated diene in an amount of from 0.3 to 4.5 mole percent, based on the copolymer, and/or terpolymers of isobutylene,

divinylbenzene in an amount of from 0.01 to 4.5% by weight, and the mentioned conjugated diene.

**11.** The adhesives according to claim 1, **characterized in that** the polyisobutylenes or plastifying oils are selected from polyisobutylene oils, especially oligomers or polymers of isobutylene or 1-butene, and naphthalene- or paraffin-based oils obtained by petroleum distillation which are optionally modified and have an average molecular weight as determined by means of gel permeation chromatography within a range of from 200 to 20,000 $g \cdot mol^{-1}$.

**12.** The adhesives according to any of claims 1 to 11, **characterized by** containing:

f) from 0 to 80% by weight, especially from 15 to 70% by weight, of polyisoprene or polybutadiene, especially grafted polyisoprene or polybutadiene.

**13.** The adhesives according to any of claims 1 to 12, **characterized by** containing:

g) from 0 to 50% by weight, especially from 0 to 40% by weight, of fillers;

h) from 0 to 25% by weight, especially from 0 to 10% by weight, of aromatic resins and/or stabilizers.

**14.** The adhesives according to claim 13, **characterized in that** said fillers are selected from inorganic fillers, especially calcium carbonate, calcium hydroxide, calcium oxide, dolomite, titanium dioxide, zinc oxide, silica, baryte and manganese dioxide, and organic fillers, especially carbon black.

**15.** The adhesives according to claim 13, **characterized in that** said stabilizers are selected from the group consisting of epoxides, sterically hindered phenols, amines, thioesters, phosphites, and triazine, piperidine and benzotriazoles.

**16.** The adhesives according to any of claims 1 to 15, **characterized by** containing adhesives based on epoxy resins, silicones, polysulfides, polyurethanes, polyureas and/or acrylates.

**17.** Use of adhesives according to one or more of claims 1 to 16 for bonding vitreous plastic substrates with thermoplastic or thermoset plastic substrates.

**18.** The use according to claim 17, **characterized in that** said vitreous plastic substrates are selected from poly(methyl methacrylate), polycarbonate or cycloolefin copolymer and said thermoplastic plastic substrates, in particular, are selected from polypropylene.

**19.** The use according to claim 17 or 18, **characterized in that** lenses or lens plates are detachably bonded to lamp housings of vehicle lamps or vehicle headlamps.

**20.** Vehicle lamps or vehicle headlamps comprising lenses or lens plates, especially bearing a scratch-proofing coating, made of a vitreous plastic substrate and a lamp housing made of a thermoplastic or thermoset polymer substrate, **characterized in that** the lenses or lens plates and lamp housings are bonded together with an adhesive as defined in one or more of claims 1 to 18.

## Revendications

**1.** Colle fusible consistant en une colle qui:

n'est pas sensible à la pression;
peut être enlevée complètement par une action pelante sous petits angles de pelage;
est fluide à la température d'application;
et qui contient:

i) des additifs connus en soi, notamment des charges, stabilisants, colorants, noir de carbone et/ou absorbants d'humidité;

ii) polyisobutylène ou une huile plastifiante;

iii) des résines collantes; et

iv) éventuellement des résines à blocage terminal; et

v) éventuellement des élastomères thermoplastiques éventuellement greffés; et

vi) éventuellement des poly($\alpha$-oléfines) éventuellement greffées.

**2.** Colles selon la revendication 1, **caractérisées en ce que** lesdits élastomères thermoplastiques sont choisis parmi les types styréniques, en particulier le SBS, le SIS, le SEBS, le SEPS et le bloc-polystyrène-(bloc-poly(éthylène-butylène)), et le bloc-polystyrène-(bloc-poly(éthylène-butylène)) avec 1 à 10 unités de bloc-polystyrène par molécule, éventuellement modifiés avec des unités bloc-polyisoprène ou bloc-butadiène; des alliages d'élastomères, en particulier les EPDM/PP, NR/PP, EVA/PVDC et NBR/PP; le polyuréthane; les polyétheresters et les polyamides.

**3.** Colles selon la revendication 1, **caractérisées en ce que** lesdites poly($\alpha$-oléfines), qui sont au moins partiellement greffées, sont choisis parmi des poly($\alpha$-oléfines) amorphes, des homopolymères, des copolymères ou des terpolymères des monomères éthylène, propylène, 1-butène, 1-pentène et 1-hexène ou des poly($\alpha$-oléfines) de formule générale (I)

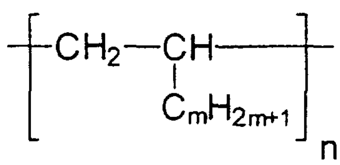

dans laquelle

m = 0 à 15 et
n = 5 à 50000.

**4.** Colles selon la revendication 3, **caractérisées en ce que** lesdites poly($\alpha$-oléfines) présentent une cristallinité partielle et sont en particulier du polyéthylène, du polypropylène et/ou du poly(1-butène) présentant dans les domaines cristallins une tacticité élevée.

**5.** Colles selon la revendication 3 ou 4, **caractérisées en ce que** lesdites poly($\alpha$-oléfines) sont greffées de manière statistique avec des composés à insaturation éthylénique, qui sont choisis en particulier parmi l'anhydride maléique, l'anhydride itaconique, l'anhydride tétrahydrophtalique et des composés de formule générale (II)

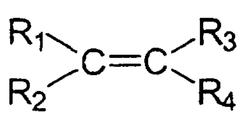

dans laquelle
$R_1$ représente des restes

a)

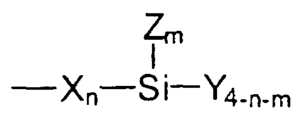

où
Z représente un atome d'hydrogène, un reste méthyle ou un reste phényle;
X représente

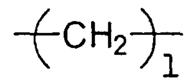

ou

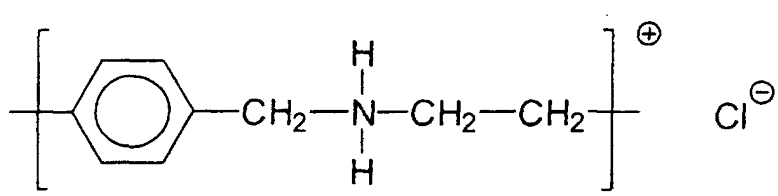

Y représente un groupe hydrolysable quelconque;
m représente un nombre entier égale à 0, 1 ou 2;
n représente un nombre entier égale à 0, 1 ou 2; et
l représente un nombre entier égale à 1, 2, 3, 4, 5 ou 6; ou
b)

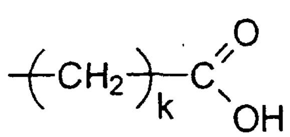

k représente un nombre entier égale à 0, 1 ou 2;

$R_2$ représente un atome d'hydrogène ou un reste méthyle;
$R_3$ représente un reste $R_1$, un atome d'hydrogène ou un reste méthyle; et
$R_4$ représente un atome d'hydrogène ou un reste méthyle.

6. Colles selon la revendication 1, **caractérisées en ce que** la quantité de poly($\alpha$-oléfines) greffées est comprise entre 0 et 100 % en masse par rapport à la teneur totale en poly($\alpha$-oléfines).

7. Colles selon la revendication 1, **caractérisées en ce que** les élastomères thermoplastiques sont greffés de manière statistique avec des composés à insaturation éthylénique qui sont choisis en particulier parmi l'anhydride maléique, l'anhydride itaconique, l'anhydride tétrahydrophtalique et des composés de formule générale (II).

8. Colles selon la revendication 1, **caractérisées en ce que** la fraction d'élastomères thermoplastiques greffés est comprise entre 0 et 100 % en masse par rapport à la masse totale des élastomères thermoplastiques.

**9.** Colles selon la revendication 1, **caractérisées en ce que** les résines adhésives sont choisies parmi les monomères polymérisés de la coupe de distillation pétrochimique en $C_5$ à $C_9$, qui ne sont pas hydrogénés ou ne le sont que partiellement ou le sont complètement, et les résines de colophane naturelles et leurs dérivés modifiés; des résines terpéniques; des résines polyterpéniques du β-pinène, de l'α-pinène et/ou du δ-limonène; des résines pouvant être obtenues par copolymérisation d'un terpène avec des monomères de la coupe en $C_5$ à $C_9$ de la distillation du pétrole, et des résines terpène-phénol.

**10.** Colles selon la revendication 1, **caractérisées en ce qu'**elles contiennent des polyisobutylènes choisis en particulier parmi des homopolymères de l'isobutylène dont la masse molaire moyenne, déterminée par chromatographie de perméation sur gel, est comprise entre 20000 et 5000000 $g \cdot mol^{-1}$, des copolymères de l'isobutylène et d'un diène conjugué en une quantité de 0,3 à 4,5 % en mol par rapport au copolymère et/ou des terpolymères de l'isobutylène, de divinylbenzène en une quantité de 0,01 à 4,5 % en mol et du diène conjugué précité.

**11.** Colles selon la revendication 1, **caractérisées en ce que** les polyisobutylènes ou les huiles plastifiantes sont choisis parmi des huiles de polyisobutylène, en particulier des oligomères ou polymères de l'isobutylène ou du 1-butène, et des huiles naphténiques ou paraffiniques éventuellement modifiées et obtenues par distillation du pétrole, ayant une masse molaire moyenne, déterminée par chromatographie de perméation sur gel, comprise entre 200 et 20000 $g \cdot mol^{-1}$.

**12.** Colles selon l'une quelconque des revendications 1 à 11, **caractérisées en ce qu'**elles contiennent
f) 0 à 80 % en masse, en particulier 15 à 70 % en masse, de polyisoprène ou polybutadiène, notamment polyisoprène ou polybutadiène greffés.

**13.** Colles selon l'une quelconque des revendications 1 à 12, **caractérisées en ce qu'**elles contiennent
g) 0 à 50 % en masse, en particulier 0 à 40 % en masse de charges;
h) 0 à 25 % en masse, en particulier 0 à 10 % en masse de résines aromatiques et/ou de stabilisants.

**14.** Colles selon la revendication 13, **caractérisées en ce que** les charges sont choisies parmi des charges inorganiques, en particulier le carbonate de calcium, l'hydroxyde de calcium, l'oxyde de calcium, la dolomite, le dioxyde de titane, l'oxyde de zinc, l'oxyde de silicium, la baryte et le dioxyde de manganèse, et des charges organiques, en particulier le noir de carbone.

**15.** Colles selon la revendication 13, **caractérisées en ce que** les stabilisants sont choisis dans le groupe des époxydes, des phénols stériquement encombrés, des aminés, des thioesters, des phosphites et des dérivés de triazine, des dérivés de pipéridine et des benzotriazoles.

**16.** Colles selon l'une quelconque des revendications 1 à 15, **caractérisées en ce qu'**elles contiennent des colles basées sur des époxy-résines, des silicones, des polysulfures, des polyuréthanes, des polyurées et/ou des acrylates.

**17.** Utilisation des colles selon l'une ou plusieurs des revendications 1 à 16 pour l'assemblage de substrats plastiques vitreuses avec des substrats plastiques thermoplastiques ou thermodurcissables.

**18.** Utilisation selon la revendication 17, **caractérisée en ce que** les substrats plastiques vitreuses sont choisies parmi le poly(méthacrylate de méthyle), le polycarbonate ou des copolymères de cyclooléfine, et en particulier **en ce que** les matières plastiques thermoplastiques sont choisies parmi les polypropylènes.

**19.** Utilisation selon la revendication 17 ou 18, **caractérisée en ce que** l'on assemble des écrans diffusants ou des diffuseurs avec des boîtiers de lampes de feux de véhicules ou de projecteurs de véhicules dans une manière amovible.

**20.** Feux de véhicules ou projecteurs de véhicules comprenant des écrans diffusants ou des diffuseurs, en particulier avec un revêtement anti-éraflures, en substrat plastique vitreuse, et des boîtiers de lampe en substrat plastique thermoplastique ou thermodurcissable, **caractérisés en ce que** les écrans diffusants ou les diffuseurs et les boîtiers de lampe sont assemblés avec une colle telle que définie dans l'une ou plusieurs des revendications 1 à 18.

Fig. 1

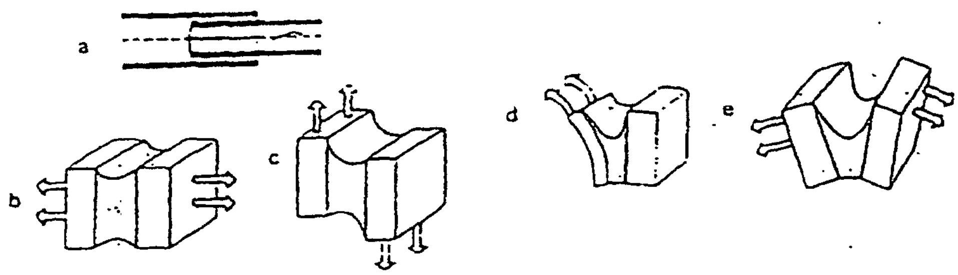


Fig. 2

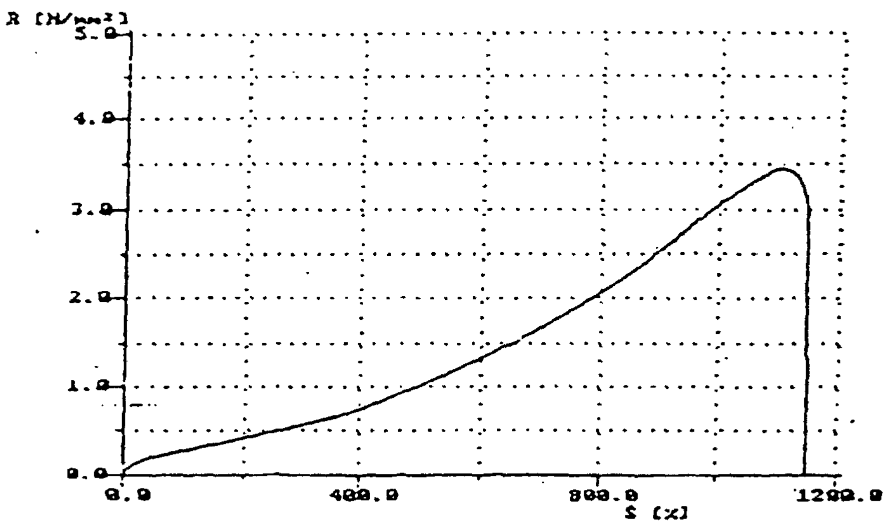


Fig. 3

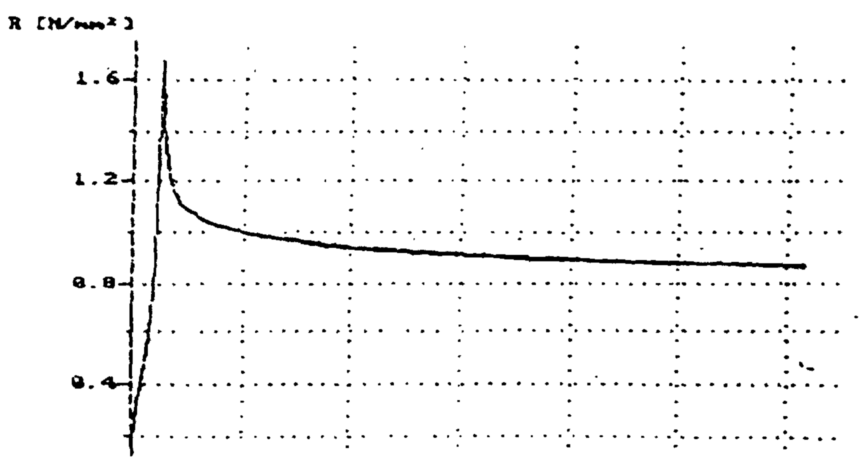

Fig. 4

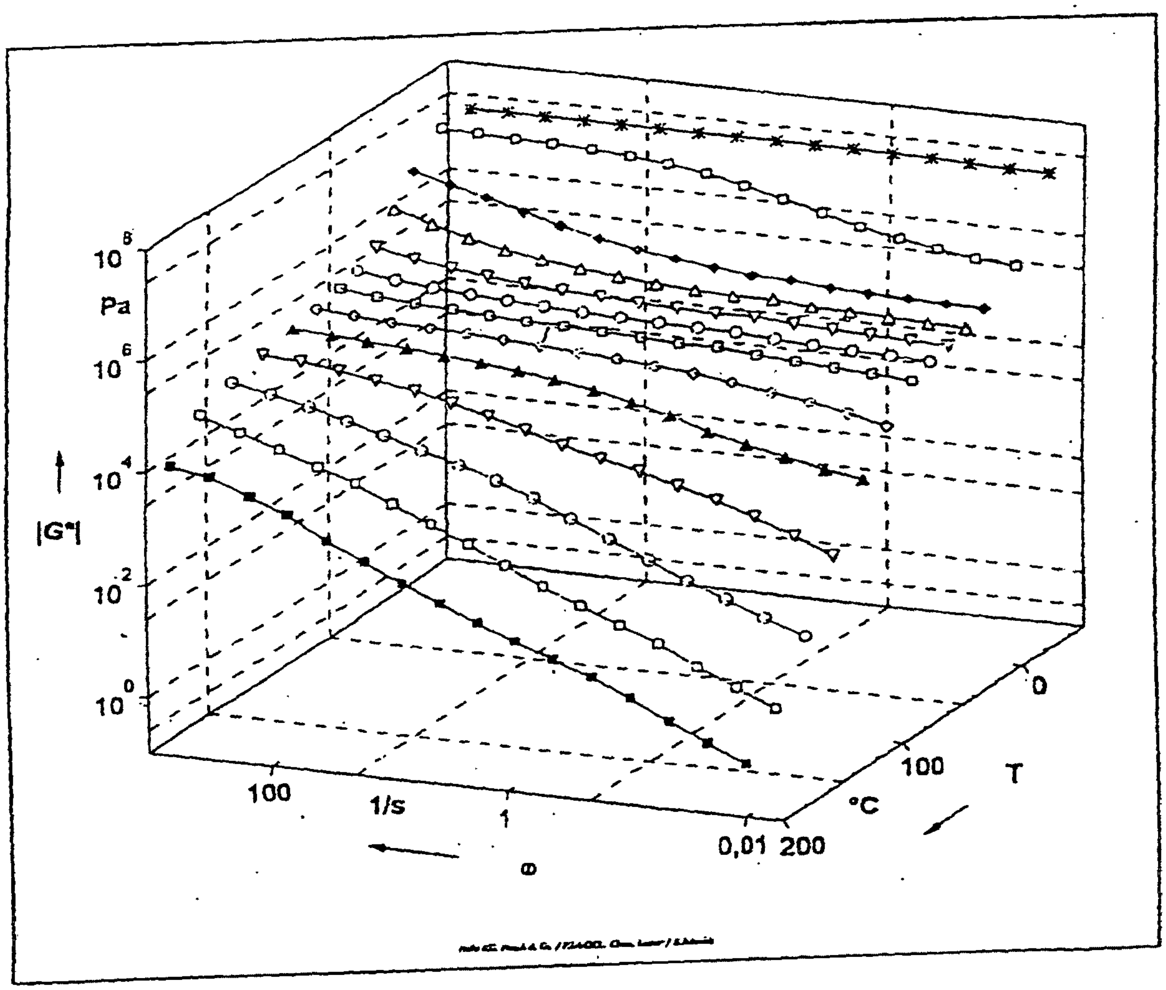

Fig. 5

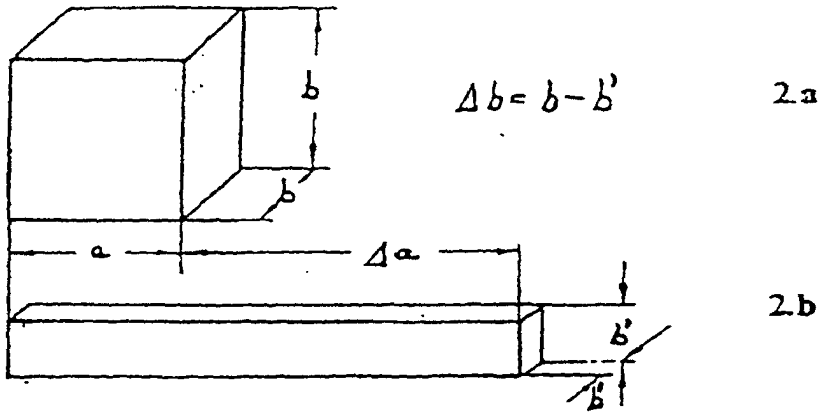


Fig. 6

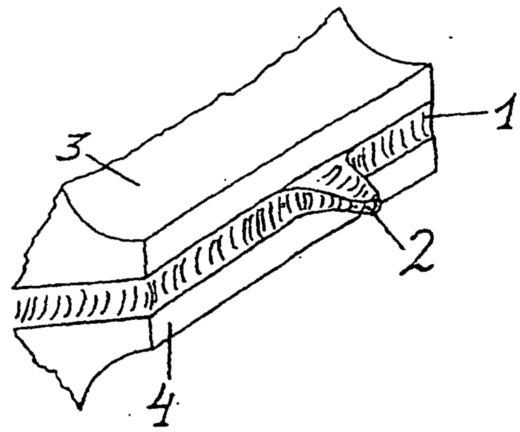


Fig. 7

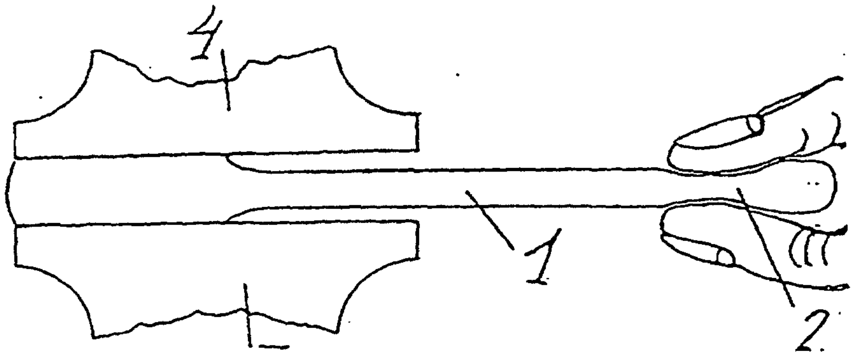

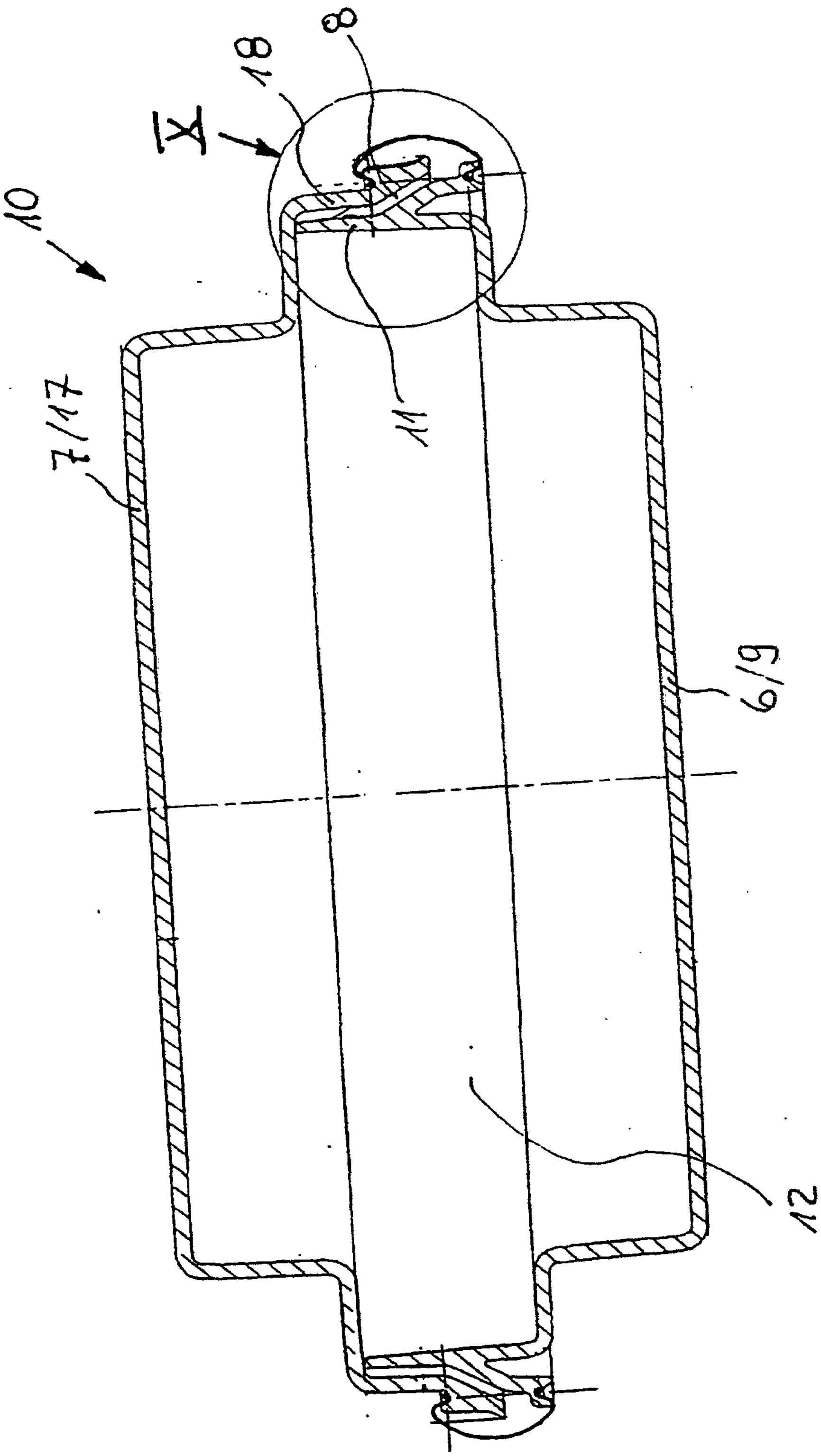


Fig. 9

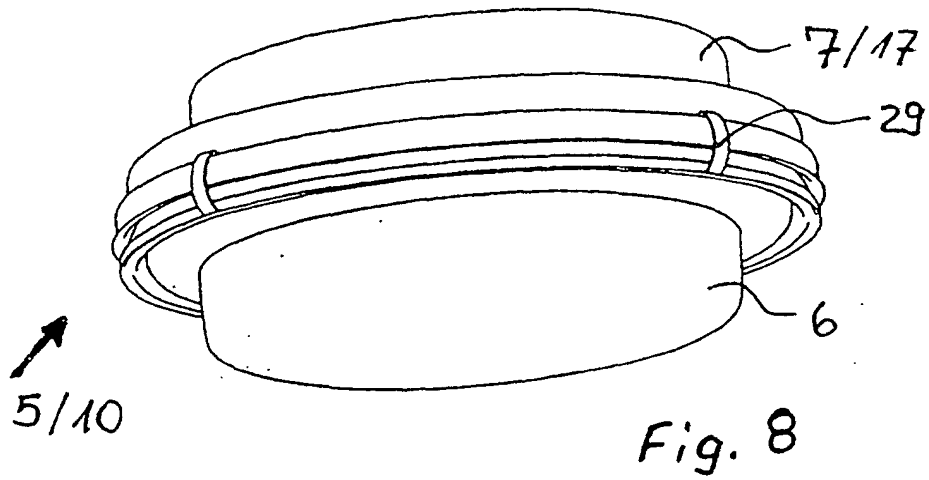


Fig. 8

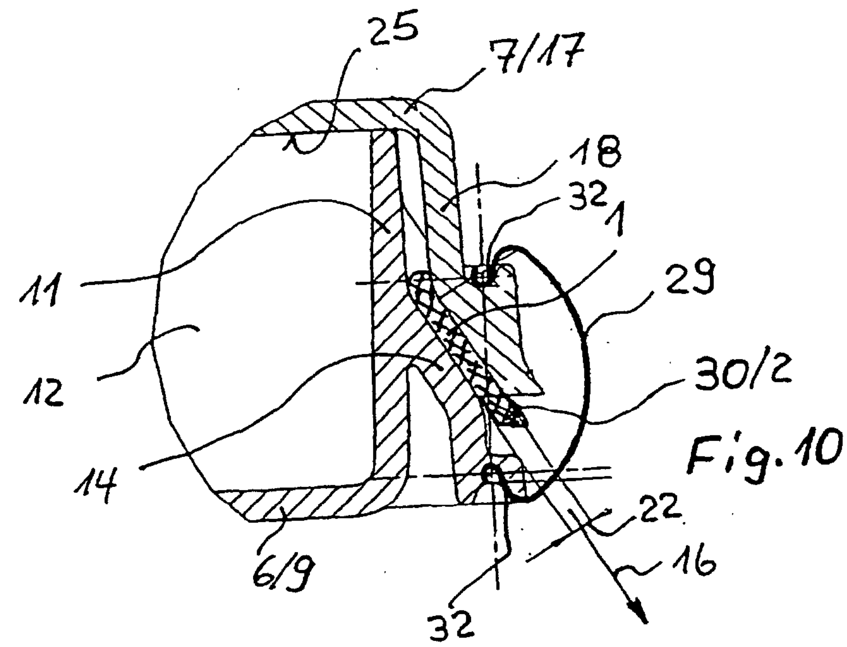


Fig. 10